(19) Europäisches Patentamt / European Patent Office / Office européen des brevets

(11) **EP 4 219 198 B1**

(12) **EUROPEAN PATENT SPECIFICATION**

(45) Date of publication and mention
of the grant of the patent:
**01.01.2025  Bulletin 2025/01**

(21) Application number: **20959290.6**

(22) Date of filing: **31.10.2020**

(51) International Patent Classification (IPC):
**B60H 1/00** *(2006.01)*     **B60H 1/24** *(2006.01)*

(52) Cooperative Patent Classification (CPC):
**B60H 1/242; B60H 1/00271; B60H 1/00478;**
**B60H 1/00785;** B60H 2001/003

(86) International application number:
**PCT/CN2020/125645**

(87) International publication number:
**WO 2022/088129 (05.05.2022 Gazette 2022/18)**

(54) **AUTOMOBILE AIR CONDITIONING UNIT, METHOD FOR CONTROLLING SAID AUTOMOBILE AIR CONDITIONING UNIT, AND CONTROLLER FOR SAID AIR CONDITIONING UNIT**

KRAFTFAHRZEUGKLIMAANLAGE, VERFAHREN ZUR STEUERUNG DER KRAFTFAHRZEUGKLIMAANLAGE UND KRAFTFAHRZEUGKLIMAANLAGENSTEUERUNG

UNITÉ DE CLIMATISATION POUR UNE AUTOMOBILE, PROCÉDÉ DE COMMANDE DE LADITE UNITÉ DE CLIMATISATION ET CONTRÔLEUR DE LADITE UNITÉ DE CLIMATISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023  Bulletin 2023/31**

(73) Proprietor: **Shenzhen Yinwang Intelligent Technologies Co., Ltd.**
**Shenzhen, Guangdong 518129 (CN)**

(72) Inventors:
• **LUO, Yuan**
  **Shenzhen, Guangdong 518129 (CN)**
• **ZHOU, Yongyou**
  **Shenzhen, Guangdong 518129 (CN)**
• **HU, Haomang**
  **Shenzhen, Guangdong 518129 (CN)**
• **ZHANG, Gaowei**
  **Shenzhen, Guangdong 518129 (CN)**

(74) Representative: **Pfenning, Meinig & Partner mbB Patent- und Rechtsanwälte**
**Theresienhöhe 11a**
**80339 München (DE)**

(56) References cited:
**EP-A1- 2 202 107       CN-A- 101 037 080**
**CN-A- 109 435 631     CN-A- 112 739 561**
**JP-A- 2015 093 515     JP-A- 2015 101 293**
**JP-B2- H07 108 824**

Description

TECHNICAL FIELD

This invention relates to a vehicle air-conditioning box, a method for controlling a vehicle air-conditioning box, and an air conditioner controller.

BACKGROUND

When a temperature difference between the inside and outside of a vehicle reaches a specific degree, humid air inside the vehicle condenses when touching a front windshield, that is, as people usually say, the front windshield fogs. The front windshield fogging seriously affects a driver's sight and has a great impact on driving safety.

In order to defog the front windshield, a heating wire is usually built in the front windshield in the related technology. When the front windshield fogs, the heating wire may be controlled to heat and evaporate fog, to achieve defogging.

In a process of implementing this invention, the inventor finds that the related technology has at least the following problem:

A process of laying the heating wire in the front windshield is complex, costs are high, and the driver's sight is affected to some extent. As a result, a driving safety problem is caused.

JP 2015 101293 A provides a vehicle air conditioner in which a Peltier element, a first heat transfer member connected to a heat radiating surface of the Peltier element, and a second heat transfer member connected to an endothermic surface of the Peltier element are stored in a first duct, and the first duct communicates with a windshield side blow-out port into a vehicle. A second duct is provided which extends from the first duct in a branching manner, and the second duct extends from the downstream side of the second heat transfer member of the first duct to an air discharge port communicating with the outside of the vehicle. The vicinity of a branch point of the first and second ducts is mounted with a switching valve for making air having passed through the second heat transfer member flow into an arbitrary port among the windshield side blow-out port and the air discharge port.

JP 2015 093515 A provides an air conditioner for a vehicle in which a Peltier element, a first heat transfer member connected to one surface of the Peltier element, and a second heat transfer member connected to another surface of the Peltier element are housed in a duct, and the duct communicates with an intra-vehicle air blowoff port. The second heat transfer member consists of an extension part extending from the other surface toward the downstream side with the flow direction of air flowing in the duct as a reference, and a heat transfer part integrally formed with the extension part and positioned on the downstream side of the first heat transfer member. The first heat transfer member and the heat transfer part of the second heat transfer member are arranged in a linear shape in the duct along the flow direction of the air.

EP 2 202 107 A1 discloses an air conditioning system of a vehicle including a controller and sensors in communication with the controller. The sensors include an interior temperature sensor for determining the temperature of the vehicle interior, and an inner surface temperature sensor for determining the temperature of the inner surface of the vehicle's windshield. The controller determines a dew-point for the vehicle interior based on the sensed interior temperature. The controller adjusts the determined dew-point or the inner surface temperature based on a correction value, and performs a defogging operation when the temperature of the inner surface of the windshield is less than the dew-point, wherein the dew-point or the inner surface temperature is the adjusted value.

SUMMARY

Embodiments of this invention provide a vehicle air-conditioning box, a method for controlling a vehicle air-conditioning box, and an air conditioner controller, to defog a windshield of a vehicle without causing a driving safety problem. The technical solutions are as follows, wherein the invention is defined by the independent claims, and preferred embodiments of the invention are laid down in the appended dependent claims.

According to a first aspect, a vehicle air-conditioning box is provided, and includes a main air duct (1), an air-conditioning air duct (2), a blower (3), a first heat dissipation structure (4), and a semiconductor refrigeration chip (5). The main air duct (1) is in communication with the air-conditioning air duct (2). The blower (3), the first heat dissipation structure (4), and the semiconductor refrigeration chip (5) are disposed in the main air duct (1). A first end of the semiconductor refrigeration chip (5) is in contact with the first heat dissipation structure (4).

In the first aspect, the first heat dissipation structure (4) may include a plurality of heat dissipation pipes and a bottom plate. The plurality of heat dissipation pipes are evenly arranged on the bottom plate. The heat dissipation pipe and the bottom plate may be made of a material with good heat conductivity. The semiconductor refrigeration chip (5) has the first end and a second end. When a constant current flows into the semiconductor refrigeration chip (5), one end of the first end and the second end heats, and the other end of the first end and the second end cools. When a reverse current flows into the semiconductor refrigeration chip (5), the heating end starts cooling, and the cooling end starts heating. The first heat dissipation structure (4) is disposed on the first end of the semiconductor refrigeration chip (5), that is, the bottom plate of the first heat dissipation structure (4) may be attached to the first end of the semiconductor refrigeration chip (5). When the first end of the semiconductor refrigeration chip (5) cools, the first heat dissipation structure (4) in contact with the first end may also have a cooling function because of good thermal conductivity. When the first end of the semiconductor refrigeration chip (5) heats, the first heat dissipation structure (4) in contact with the first end may also have a cooling function.

The air conditioner controller may control the first end of the semiconductor refrigeration chip (5) to cool, and the first heat dissipation structure (4) in contact with the first end may dehumidify air blown by the blower (3), that is, condense water vapor in the air, so that the air passing through the first heat dissipation structure (4) is dry. The dehumidified air may flow to the air-conditioning air duct (2). In winter, a driver may turn on an air conditioner for heating, and the dry air passing through the air-conditioning air duct (2) may be heated by an original heating component in the air conditioner and blow to a front windshield for defogging or inhibiting fogging.

In addition, the semiconductor refrigeration chip does not need to be used with an excessively large amount of electricity, and can be used even when a battery level of a vehicle is relatively low. This can effectively save electricity.

In the first aspect, the vehicle air-conditioning box further includes a second heat dissipation structure (6), a heat conducting component (7), and a first electric control air door (8). A first air communication opening (9) and a second air communication opening (10) are disposed between the main air duct (1) and the air-conditioning air duct (2), the first air communication opening (9) is located between a first air duct section (101) of the main air duct (1) and the air-conditioning air duct (2), and the second air communication opening (10) is located between a second air duct section (102) of the main air duct (1) and the air-conditioning air duct (2). The first electric control air door (8) is disposed at the first air communication opening (9), when the first electric control air door (8) is located at a first position, the first electric control air door (8) blocks the first air duct section (101) from the second air duct section (102), and the first air duct section (101) is in communication with the air-conditioning air duct (2), and when the first electric control air door (8) is located at a second position, the first electric control air door (8) blocks the first air duct section (101) from the air-conditioning air duct (2), and the first air duct section (101) is in communication with the second air duct section (102). The second heat dissipation structure (6) is disposed in the second air duct section (102), and the second end of the semiconductor refrigeration chip (5) is connected to the second heat dissipation structure (6) through the heat conducting component (7).

In the first aspect, to meet defogging requirements in different seasons, the second heat dissipation structure (6) is further disposed. The second heat dissipation structure (6) may include a plurality of heat dissipation pipes and a bottom plate. The plurality of heat dissipation pipes are evenly arranged on the bottom plate. The heat dissipation pipe and the bottom plate may be made of a material with good heat conductivity. The heat conducting component (7) may be a heat conducting pipe, and specifically, may be made of a material with good heat conductivity, for example, a copper pipe. One end of the heat conducting component (7) is connected to the second end of the semiconductor refrigeration chip (5), and the other end of the heat conducting component (7) is connected to the bottom plate of the second heat dissipation structure (6).

When the first end of the semiconductor refrigeration chip (5) cools, and the second end of the semiconductor refrigeration chip (5) heats, the first heat dissipation structure (4) in contact with the first end may also have a cooling function, and the second heat dissipation structure (6) may also have a heating function because the second heat dissipation structure (6) is connected to the second end of the semiconductor refrigeration chip (5) by using the heat conducting component (7). When the first end of the semiconductor refrigeration chip (5) heats, and the second end of the semiconductor refrigeration chip (5) cools, the first heat dissipation structure (4) in contact with the first end may also have a cooling function, and the second heat dissipation structure (6) may have a heating function.

In this way, in winter, cold air dehumidified by the first heat dissipation structure (4) may be heated by the second heat dissipation structure (6), and then blow to a windshield and another part in the vehicle through the air-conditioning air duct (2), to perform defogging. However, in summer, cold air dehumidified by the first heat dissipation structure (4) may be blocked by the first electric control air door (8) from flowing to the second heat dissipation structure (6), but directly blow to the windshield and another part in the vehicle through the air-conditioning air duct (2), to perform defogging.

In a possible implementation, the vehicle air-conditioning box further includes an outside-vehicle air outlet duct (11) and a second electric control air door (12). One end of the outside-vehicle air outlet duct (11) is connected to the second air duct section (102). The second electric control air door (12) is disposed at the second air communication opening (10), when the second electric control air door (12) is located at a third position, the second electric control air door (12) blocks the second air duct section (102) from the air-conditioning air duct (2), and when the second electric control air door (12) is located at a fourth position, the second electric control air door (12) blocks the outside-vehicle air outlet duct (11) from the second air duct section (102).

In the solution shown in this embodiment of this invention, when the first electric control air door (8) is located at the first position, a gap may exist between the first electric control air door (8) and the main air duct (1). In this way, in summer, cold air dehumidified by the first heat dissipation structure (4) may flow to the second heat dissipation structure (6) through the gap, and may be expelled to the outside of the vehicle through the outside-vehicle air outlet duct (11), to avoid blowing the air into the vehicle and causing a temperature rise inside the vehicle.

In a possible implementation, the vehicle air-conditioning box further includes an outside-vehicle air inlet duct (13), an inside-vehicle air inlet duct (14), and a third electric control air door (15). One end of the outside-vehicle air inlet duct (13) is connected to the inside-vehicle air inlet duct (14), and is connected to the first air duct section (101). One end of the inside-vehicle air inlet duct (14) is connected to the outside-vehicle air inlet duct (13), and is connected to the first air duct section (101). The third electric control air door (15) is disposed at a joint between the inside-vehicle air inlet duct (14) and the outside-vehicle air inlet duct (13), when the third electric control air door (15) is located at a fifth position, the third electric control air door (15) blocks the outside-vehicle air inlet duct (13) from the first air duct section (101), and blocks the outside-vehicle air inlet duct (13) from the inside-vehicle air inlet duct (14), and when the third electric control air door (15) is located at a sixth position, the third electric control air door (15) blocks the inside-vehicle air inlet duct (14) from the first air duct section (101), and blocks the inside-vehicle air inlet duct (14) from the outside-vehicle air inlet duct (13).

In the solution shown in this embodiment of this invention, the air conditioner controller may send a control instruction for the third electric control air door (15) to a power supply based on an actual requirement. The control instruction is used to indicate a voltage applied by the power supply to a motor in the third electric control air door (15), to control a rotation angle of the third electric control air door (15). By controlling the rotation angle of the third electric control air door (15), the third electric control air door (15) may be switched between the fifth position and the sixth position. When the third electric control air door (15) is at the fifth position, the third electric control air door (15) blocks the outside-vehicle air inlet duct (13) from the first air duct section (101), and the inside-vehicle air inlet duct (14) is in communication with the first air duct section (101). When the third electric control air door (15) is at the sixth position, the third electric control air door (15) blocks the inside-vehicle air inlet duct (14) from the first air duct section (101), and the outside-vehicle air inlet duct (13) is in communication with the first air duct section (101).

In this way, during defogging in winter, dry air outside the vehicle may enter the vehicle air-conditioning box through the outside-vehicle air inlet duct (13), and during defogging in rainy days in summer, dry air inside the vehicle may enter the vehicle air-conditioning box through the inside-vehicle air inlet duct (14).

In a possible implementation, the heat conducting component (7) is a copper pipe.

In the solution shown in this embodiment of this invention, the heat conducting component (7) is configured to conduct heat at the second end of the semiconductor refrigeration chip (5) to the second heat dissipation structure (6). Therefore, the heat conducting component (7) may be of a material with good heat conducting performance, for example, a copper pipe.

According to a second aspect, a method for controlling ... a vehicle air-conditioning box is provided, wherein the method is applied to the vehicle air-conditioning box according to the first aspect. The method includes method includes:

obtaining a current front windshield temperature, a current front windshield humidity, a current inside-vehicle temperature, and a current ambient temperature;
determining, based on the current front windshield temperature, the current front windshield humidity, the current inside-vehicle temperature, and the current ambient temperature, whether a front windshield has a fogging risk; and
controlling the blower (3) to start, and controlling the first end of the semiconductor refrigeration chip (5) to cool if it is determined that the front windshield has the fogging risk.

In the second aspect, the method further includes:
controlling the blower (3) to start, and controlling the first end of the semiconductor refrigeration chip (5) to heat if it is determined that the front windshield has no fogging risk, and the current inside-vehicle temperature is less than a third threshold.

In the second aspect, the controlling the blower (3) to start, and controlling the first end of the semiconductor refrigeration chip (5) to cool if it is determined that the front windshield has the fogging risk includes:

controlling the blower (3) to start, controlling the first end of the semiconductor refrigeration chip (5) to cool, and controlling the first electric control air door (8) to be switched to the second position if it is determined that the front windshield has the fogging risk, and the current ambient temperature is less than a first threshold; and
the controlling the blower (3) to start, and controlling the first end of the semiconductor refrigeration chip (5) to heat if it is determined that the front windshield has no fogging risk, and the current inside-vehicle temperature the is less than the third threshold includes:
controlling the blower (3) to start, controlling the first end of the semiconductor refrigeration chip (5) to heat, and controlling the first electric control air door (8) to be switched to the first position if it is determined that the front windshield has no fogging risk, and the current inside-vehicle temperature is less than the third threshold.

In a possible implementation, the method further includes:

controlling the blower (3) to start, controlling the first end of the semiconductor refrigeration chip (5) to cool, and controlling the first electric control air door (8) to be switched to the first position if it is determined that the front windshield has the fogging risk, and the current ambient temperature is greater than a second threshold.

In a possible implementation, the controlling the blower (3) to start, controlling the first end of the semiconductor refrigeration chip (5) to cool, and controlling the first electric control air door (8) to be switched to the second position if it is determined that the front windshield has the fogging risk, and the current ambient temperature is less than the first threshold includes:

controlling the blower (3) to start, controlling the first end of the semiconductor refrigeration chip (5) to cool, controlling the first electric control air door (8) to be switched to the second position, and controlling the second electric control air door (12) to be switched to the fourth position, if it is determined that the front windshield has the fogging risk, and the current ambient temperature is less than the first threshold;

the controlling the blower (3) to start, controlling the first end of the semiconductor refrigeration chip (5) to cool, and controlling the first electric control air door (8) to be switched to the first position if it is determined that the front windshield has the fogging risk, and the current ambient temperature is greater than the second threshold includes: controlling the blower (3) to start, controlling the first end of the semiconductor refrigeration chip (5) to cool, controlling the first electric control air door (8) to be switched to the first position, and controlling the second electric control air door (12) to be switched to the third position, if it is determined that the front windshield has the fogging risk, and the current ambient temperature is greater than the second threshold; and

the controlling the blower (3) to start, controlling the first end of the semiconductor refrigeration chip (5) to heat, and controlling the first electric control air door (8) to be switched to the first position if it is determined that the front windshield has no fogging risk, and the current inside-vehicle temperature is less than the third threshold includes: controlling the blower (3) to start, controlling the first end of the semiconductor refrigeration chip (5) to heat, controlling the first electric control air door (8) to be switched to the first position, and controlling the second electric control air door (12) to be switched to the third position, if it is determined that the front windshield has no fogging risk, and the current inside-vehicle temperature is less than the third threshold.

In a possible implementation, the controlling the blower (3) to start, controlling the first end of the semiconductor refrigeration chip (5) to cool, controlling the first electric control air door (8) to be switched to the second position, and controlling the second electric control air door (12) to be switched to the fourth position, if it is determined that the front windshield has the fogging risk, and the current ambient temperature is less than the first threshold includes: controlling the third electric control air door (15) to be switched to the sixth position, controlling the blower (3) to start, controlling the first end of the semiconductor refrigeration chip (5) to cool, controlling the first electric control air door (8) to be switched to the second position, and controlling the second electric control air door (12) to be switched to the fourth position, if it is determined that the front windshield has the fogging risk, and the current ambient temperature is less than the first threshold;

the controlling the blower (3) to start, controlling the first end of the semiconductor refrigeration chip (5) to cool, controlling the first electric control air door (8) to be switched to the first position, and controlling the second electric control air door (12) to be switched to the third position, if it is determined that the front windshield has the fogging risk, and the current ambient temperature is greater than the second threshold includes: controlling the third electric control air door (15) to be switched to the fifth position, controlling the blower (3) to start, controlling the first end of the semiconductor refrigeration chip (5) to cool, controlling the first electric control air door (8) to be switched to the first position, and controlling the second electric control air door (12) to be switched to the third position, if it is determined that the front windshield has the fogging risk, and the current ambient temperature is greater than the second threshold; and

the controlling the blower (3) to start, controlling the first end of the semiconductor refrigeration chip (5) to heat, controlling the first electric control air door (8) to be switched to the first position, and controlling the second electric control air door (12) to be switched to the third position, if it is determined that the front windshield has no fogging risk, and the current inside-vehicle temperature is less than the third threshold includes: controlling the third electric control air door (15) to be switched to the fifth position, controlling the blower (3) to start, controlling the first end of the semiconductor refrigeration chip (5) to heat, controlling the first electric control air door (8) to be switched to the first position, and controlling the second electric control air door (12) to be switched to the third position, if it is determined that the front windshield has no fogging risk, and the current inside-vehicle temperature is less than the third threshold.

In a possible implementation, the determining, based on the current front windshield temperature, the current front windshield humidity, the current inside-vehicle temperature, and the current ambient temperature, whether a front windshield has a fogging risk includes:

determining a current dew point temperature based on the current front windshield humidity and the current inside-vehicle temperature;

calculating a difference between the current front windshield temperature and the current dew point temperature; and determining, based on the difference, whether the front windshield has the fogging risk.

In a possible implementation, the obtaining a current front windshield temperature, a current front windshield humidity, a current inside-vehicle temperature, and a current ambient temperature includes:

obtaining the current front windshield temperature, the current front windshield humidity, the current inside-vehicle temperature, the current ambient temperature, a current quantity of inside-vehicle persons, and a current rainfall amount; and

the determining, based on the difference, whether the front windshield has the fogging risk includes:

adjusting the difference based on the current quantity of inside-vehicle persons and the current rainfall amount, and determining, based on an adjusted difference, whether the front windshield has the fogging risk.

According to a third aspect, an air conditioner controller is provided. The air conditioner controller includes a processor and a memory, the memory stores at least one instruction, and the instruction is loaded and executed by the processor to implement an operation performed in the method according to the is second aspect.

According to a fourth aspect, a vehicle defogging system is provided. The vehicle defogging system includes the air conditioner controller according to the third aspect and the vehicle air-conditioning box according to the first aspect.

According to a fifth aspect, a computer-readable storage medium is provided. The computer-readable storage medium includes instructions, and when the computer-readable storage medium runs on an air conditioner controller, the air conditioner controller is enabled to perform the method according to the second aspect.

According to a sixth aspect, a computer program product including an instruction is provided. When the computer program product runs on an air conditioner controller, the air conditioner controller is enabled to perform the method according to the second aspect.

Beneficial effects brought by the technical solutions provided in the embodiments of this invention are as follows.

In the embodiments of this invention, a vehicle air-conditioning box includes a main air duct, an air-conditioning air duct, a blower, a first heat dissipation structure, and a semiconductor refrigeration chip. The main air duct is in communication with the air-conditioning air duct, and the blower, the first heat dissipation structure, and the semiconductor refrigeration chip are disposed in the main air duct. A first end of the semiconductor refrigeration chip is in contact with the first heat dissipation structure. The first end of the semiconductor refrigeration chip may be controlled to cool, so that air entering the vehicle air-conditioning box may be cooled and dehumidified by the first heat dissipation structure in contact with the semiconductor refrigeration chip, and become dry air, and then blow to a windshield through the air-conditioning air duct for defogging, or air inside a vehicle is dried to avoid the windshield from fogging.

**BRIEF DESCRIPTION OF DRAWINGS**

FIG. 1 is a schematic diagram of a vehicle air-conditioning box according to an embodiment of this invention;
FIG. 2 is a schematic diagram of a connection relationship between a semiconductor refrigeration chip, a first heat dissipation structure, a heat conducting component, and a second heat dissipation structure according to an embodiment of this invention;
FIG. 3 is a schematic diagram of a vehicle air-conditioning box according to an embodiment of this invention;
FIG. 4 is a schematic diagram of a vehicle air-conditioning box according to an embodiment of this invention;
FIG. 5 is a schematic diagram of a vehicle air-conditioning box according to an embodiment of this invention;
FIG. 6 is a flowchart of a method for controlling a vehicle air-conditioning box according to an embodiment of this invention;
FIG. 7 is a flowchart of a method for controlling a vehicle air-conditioning box according to an embodiment of this invention;
FIG. 8 is a flowchart of a method for controlling a vehicle air-conditioning box according to an embodiment of this invention;
FIG. 9 is a flowchart of a method for controlling a vehicle air-conditioning box according to an embodiment of this invention; and
FIG. 10 is a schematic diagram of an air conditioner controller according to an embodiment of this invention.

Reference numerals:

1: main air duct; 2: air-conditioning air duct; 3: blower; 4: first heat dissipation structure; 5: semiconductor refrigeration chip; 6: second heat dissipation structure; 7: heat conducting component; 8: first electric control air door; 9: first air communication opening; 10: second air communication opening; 11: outside-vehicle air outlet duct; 12: second electric control air door; 13: outside-vehicle air inlet duct; 14: inside-vehicle air inlet duct; 15: third electric control air door;

101: first air duct section; 102: second air duct section.

## DESCRIPTION OF EMBODIMENTS

An embodiment of this invention provides a vehicle air-conditioning box. The vehicle air-conditioning box may be applied to various vehicles such as a new energy vehicle and a fuel vehicle. The vehicle air-conditioning box may defog a front windshield by blowing dry cold air or hot air, without affecting driving safety of a driver.

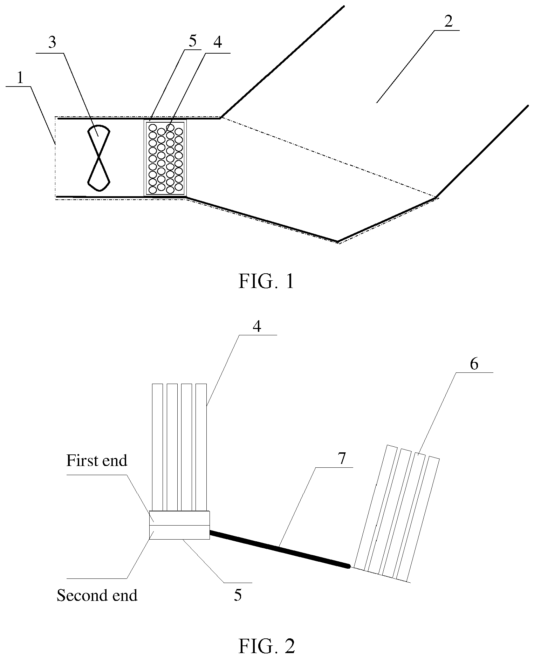

The vehicle air-conditioning box provided in this embodiment of this invention is shown in FIG. 1. FIG. 1 is a top view of the vehicle air-conditioning box. The vehicle air-conditioning box includes:

a main air duct (1), an air-conditioning air duct (2), a blower (3), a first heat dissipation structure (4), and a semiconductor refrigeration chip (5). The main air duct (1) is in communication with the air-conditioning air duct (2), and the blower (3), the first heat dissipation structure (4), and the semiconductor refrigeration chip (5) are disposed in the main air duct (1). A first end of the semiconductor refrigeration chip (5) is in contact with the first heat dissipation structure (4).

In an implementation, the first heat dissipation structure (4) may include a plurality of heat dissipation pipes and a bottom plate. The plurality of heat dissipation pipes are evenly arranged on the bottom plate. The heat dissipation pipe and the bottom plate may be made of a material with good heat conductivity, for example, an aluminum alloy.

The semiconductor refrigeration chip (5) has the first end and a second end. When a constant current flows into the semiconductor refrigeration chip (5), one end of the first end and the second end heats, and the other end of the first end and the second end cools. When a reverse current flows into the semiconductor refrigeration chip (5), the heating end starts cooling, and the cooling end starts heating.

The first heat dissipation structure (4) is disposed on the first end of the semiconductor refrigeration chip (5), that is, the bottom plate of the first heat dissipation structure (4) may be attached to the first end of the semiconductor refrigeration chip (5).

The semiconductor refrigeration chip (5) may be electrically connected to a power supply carried in a vehicle, and the power supply is configured to input a constant current in a specified direction to the semiconductor refrigeration chip, so that one end of the semiconductor refrigeration chip (5) heats, and the other end of the semiconductor refrigeration chip (5) cools. Specifically, the air conditioner controller of the vehicle may send a control instruction for the semiconductor refrigeration chip (5) to the power supply based on a current fogging risk of a windshield. The control instruction is used to indicate a direction in which the power supply outputs a current to the semiconductor refrigeration chip (5) and output power of the power supply for the semiconductor refrigeration chip (5).

When the first end of the semiconductor refrigeration chip (5) cools, the first heat dissipation structure (4) in contact with the first end may also have a cooling function because of good thermal conductivity. When the first end of the semiconductor refrigeration chip (5) heats, the first heat dissipation structure (4) in contact with the first end may also have a cooling function.

Alternatively, the blower (3) may be electrically connected to the power supply, and the power supply may control the blower (3) to be powered on. Specifically, the air conditioner controller of the vehicle may send a control instruction for the blower (3) to the power supply based on a current fogging risk of a windshield. The control instruction is used to indicate output power of the power supply for the blower (3).

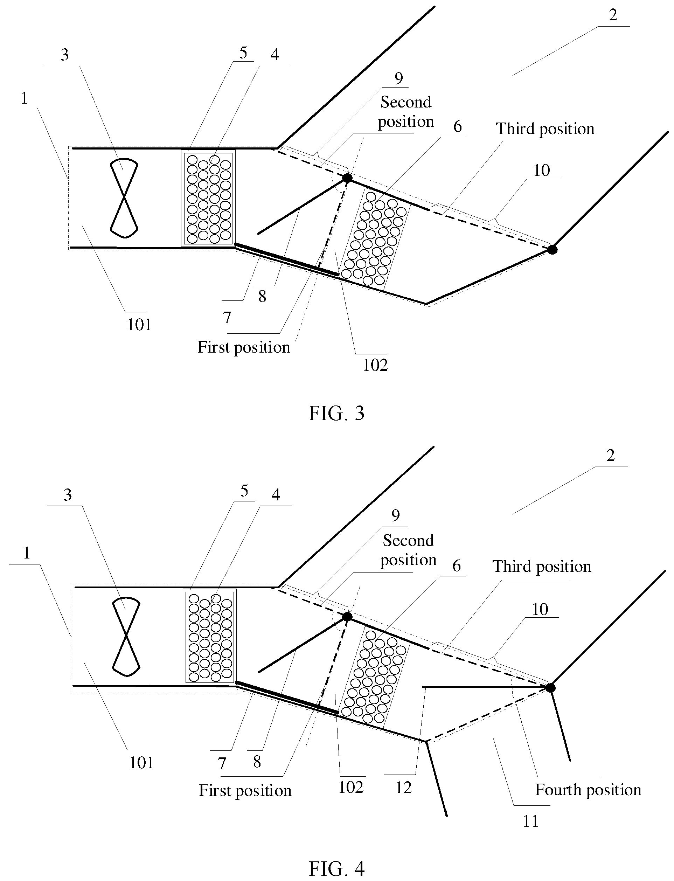

According to this invention, as shown in FIG. 3, the vehicle air-conditioning box includes a second heat dissipation structure (6), a heat conducting component (7), and a first electric control air door (8). A first air communication opening (9) and a second air communication opening (10) are disposed between the main air duct (1) and the air-conditioning air duct (2), the first air communication opening (9) is located between a first air duct section (101) of the main air duct (1) and the air-conditioning air duct (2), and the second air communication opening (10) is located between a second air duct section (102) of the main air duct (1) and the air-conditioning air duct (2). The first electric control air door (8) is disposed at the first air communication opening (9). When the first electric control air door (8) is located at a first position, the first electric control air door (8) blocks the first air duct section (101) from the second air duct section (102), and the first air duct section (101) is in communication with the air-conditioning air duct (2). When the first electric control air door (8) is located at a second position, the first electric control air door (8) blocks the first air duct section (101) from the air-conditioning air duct (2), and the first air duct section (101) is in communication with the second air duct section (102). The second heat dissipation structure (6) is disposed in the second air duct section (102), and the second end of the semiconductor refrigeration chip (5) is connected to the second heat dissipation structure (6) through the heat conducting component (7).

In an implementation, a baffle plate may be disposed between the main air duct (1) and the air-conditioning air duct (2) to form the first air communication opening (9) and the second air communication opening (10). The first electric control air door (8) may be disposed at the first air communication opening (9).

A boundary between the first air duct section (101) and the second air duct section (102) of the main air duct (1) is the first position of the first electric control air door (8).

A motor in the first electric control air door (8) may be electrically connected to the power supply. The air conditioner controller may send a control instruction for the first electric control air door (8) to the power supply based on an actual requirement. The control instruction is used to indicate a voltage applied by the power supply to the motor in the first electric control air door (8), to control a rotation angle of the first electric control air door (8). By controlling the rotation angle of the first electric control air door (8), the first electric control air door (8) may be switched between the first position and the second position. When the first electric control air door (8) is at the first position, the first electric control air door (8) blocks the first air duct section (101) from the second air duct section (102). When the first electric control air door (8) is at the second position, the first electric control air door (8) blocks the first air duct section (101) from the air-conditioning air duct (2).

The second heat dissipation structure (6) may include a plurality of heat dissipation pipes and a bottom plate. The plurality of heat dissipation pipes are evenly arranged on the bottom plate. The heat dissipation pipe and the bottom plate may be made of a material with good heat conductivity, for example, an aluminum alloy.

The heat conducting component (7) may be a heat conducting pipe, and specifically, may be made of a material with good heat conductivity, for example, a copper pipe.

As shown in FIG. 2, one end of the heat conducting component (7) is connected to the second end of the semiconductor refrigeration chip (5), and the other end of the heat conducting component (7) is connected to the bottom plate of the second heat dissipation structure (6). FIG. 2 is a diagram of a connection relationship between the semiconductor refrigeration chip (5), the first heat dissipation structure (4), the heat conducting component (7), and the second heat dissipation structure (6).

When the first end of the semiconductor refrigeration chip (5) cools, and the second end of the semiconductor refrigeration chip (5) heats, the first heat dissipation structure (4) in contact with the first end may also have a cooling function, and the second heat dissipation structure (6) may also have a heating function because the second heat dissipation structure (6) is connected to the second end of the semiconductor refrigeration chip (5) by using the heat conducting component (7). When the first end of the semiconductor refrigeration chip (5) heats, and the second end of the semiconductor refrigeration chip (5) cools, the first heat dissipation structure (4) in contact with the first end may also have a cooling function, and the second heat dissipation structure (6) may have a heating function.

In a possible implementation, as shown in FIG. 4, the vehicle air-conditioning box further includes an outside-vehicle air outlet duct (11) and a second electric control air door (12). One end of the outside-vehicle air outlet duct (11) is connected to the second air duct section (102). The second electric control air door (12) is disposed at the second air communication opening (10), when the second electric control air door (12) is located at a third position, the second electric control air door (12) blocks the second air duct section (102) from the air-conditioning air duct (2), and when the second electric control air door (12) is located at a fourth position, the second electric control air door (12) blocks the outside-vehicle air outlet duct (11) from the second air duct section (102).

In an implementation, a motor in the second electric control air door (12) may also be electrically connected to the power supply. The air conditioner controller may send a control instruction for the second electric control air door (12) to the power supply based on an actual requirement. The control instruction is used to indicate a voltage applied by the power supply to the motor in the second electric control air door (12), to control a rotation angle of the second electric control air door (12). By controlling the rotation angle of the second electric control air door (12), the second electric control air door (12) may be switched between the third position and the fourth position. When the second electric control air door (12) is at the third position, the second electric control air door (12) blocks the second air duct section (102) from the air-conditioning air duct (2). When the second electric control air door (12) is at the fourth position, the second electric control air door (12) blocks the outside-vehicle air outlet duct (11) from the second air duct section (102).

The outside-vehicle air outlet duct (11) may expel air inside the vehicle to the outside of the vehicle.

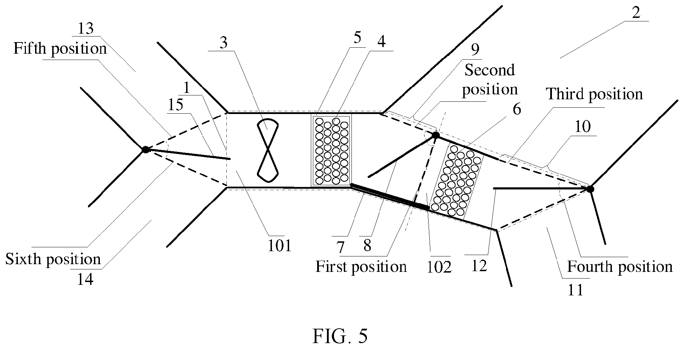

In a possible implementation, as shown in FIG. 5, the vehicle air-conditioning box further includes an outside-vehicle air inlet duct (13), an inside-vehicle air inlet duct (14), and a third electric control air door (15). One end of the outside-vehicle air inlet duct (13) is connected to the inside-vehicle air inlet duct (14), and is connected to the first air duct section (101). One end of the inside-vehicle air inlet duct (14) is connected to the outside-vehicle air inlet duct (13), and is connected to the first air duct section (101). The third electric control air door (15) is disposed at a joint between the inside-vehicle air inlet duct (14) and the outside-vehicle air inlet duct (13), when the third electric control air door (15) is located at a fifth position, the third electric control air door (15) blocks the outside-vehicle air inlet duct (13) from the first air duct section (101), and blocks the outside-vehicle air inlet duct (13) from the inside-vehicle air inlet duct (14), and when the third electric control air door (15) is located at a sixth position, the third electric control air door (15) blocks the inside-vehicle air inlet duct (14) from the first air duct section (101), and blocks the inside-vehicle air inlet duct (14) from the outside-vehicle air inlet duct (13).

In an implementation, the outside-vehicle air inlet duct (13) may enable air outside the vehicle to flow to the vehicle air-conditioning box, and the inside-vehicle air inlet duct (14) may enable air inside the vehicle to flow to the vehicle air-conditioning box. The third electric control air door (15) is configured to control whether air entering the vehicle air-conditioning box comes from the outside or the inside of the vehicle.

A motor in the third electric control air door (15) may also be electrically connected to the power supply. The air conditioner controller may send a control instruction for the third electric control air door (15) to the power supply based on an actual requirement. The control instruction is used to indicate a voltage applied by the power supply to the motor in the third electric control air door (15), to control a rotation angle of the third electric control air door (15). By controlling the rotation angle of the third electric control air door (15), the third electric control air door (15) may be switched between the fifth position and the sixth position. When the third electric control air door (15) is at the fifth position, the third electric control air door (15) blocks the outside-vehicle air inlet duct (13) from the first air duct section (101), and the inside-vehicle air inlet duct (14) is in communication with the first air duct section (101). When the third electric control air door (15) is at the sixth position, the third electric control air door (15) blocks the inside-vehicle air inlet duct (14) from the first air duct section (101), and the outside-vehicle air inlet duct (13) is in communication with the first air duct section (101).

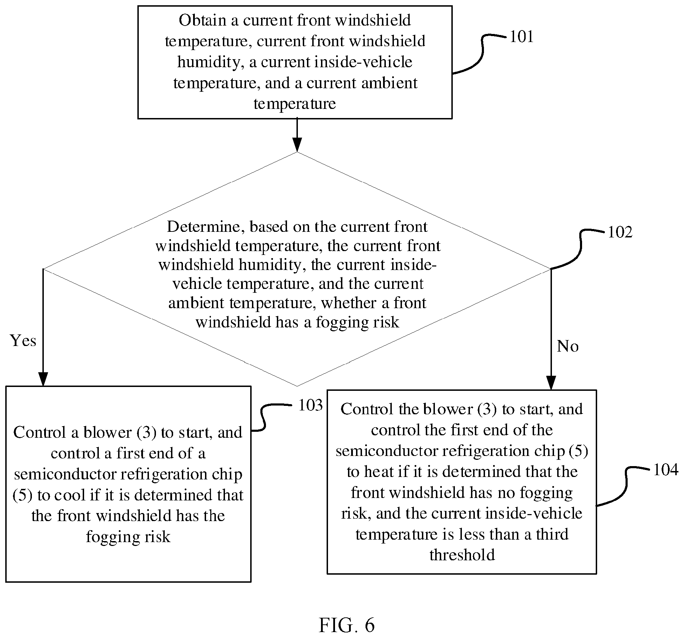

The following describes a method for controlling the vehicle air-conditioning box shown in FIG. 1. The control method may be implemented by an air conditioner controller. As shown in FIG. 6, a processing procedure of the method may include the following steps.

S101: Obtain a current front windshield temperature, current front windshield humidity, a current inside-vehicle temperature, and a current ambient temperature.

In an implementation, a glass temperature sensor, a glass humidity sensor, an inside-vehicle temperature sensor, and an ambient temperature sensor may be installed on a vehicle. The glass temperature sensor may be installed on an inside-vehicle surface of a front windshield in a contact manner, the glass humidity sensor may be installed on the inside-vehicle surface of the front windshield in a contact manner, the inside-vehicle temperature sensor may be installed inside the vehicle, and the ambient temperature sensor may be installed outside the vehicle. The air conditioner controller may obtain detection data from the sensors based on a preset detection periodicity. Alternatively, the sensors may actively send detection data to the air conditioner controller based on a preset periodicity. The detection data may include the current front windshield temperature, the current inside-vehicle temperature, the current front windshield humidity, and the current ambient temperature.

S102: Determine, based on the current front windshield temperature, the current front windshield humidity, the current inside-vehicle temperature, and the current ambient temperature, whether the front windshield has a fogging risk.

In an implementation, after obtaining the current front windshield temperature, the current front windshield humidity, the current inside-vehicle temperature, and the current ambient temperature, the air conditioner controller may determine, based on a pre-stored correspondence between glass humidity, an inside-vehicle temperature, and a dew point temperature, a current dew point temperature that the current front windshield humidity and the current inside-vehicle temperature jointly correspond to. The correspondence between the glass humidity, the inside-vehicle temperature, and the dew point temperature may be in a form of a correspondence table, a relational expression, or the like that is used to indicate a relationship between a plurality of variables.

Then, a difference N between the current front windshield temperature and the current dew point temperature is calculated. Then, a pre-stored fogging risk table is looked up based on the difference, to determine a current fogging risk. A possible form of the fogging risk table may be shown in Table 1 as follows.

**Table 1**

| Safety coefficient | Fogging risk level | Fogging condition |
|---|---|---|
| $N > X1$ | L0 | No fogging risk |
| $X2 < N \leq X1$ | L1 | Slight fogging risk |
| $0 < N \leq X2$ | L2 | High-risk fogging risk |
| $N \leq 0$ | L3 | Fogging occurs |

Values of X1 and X2 may be calibrated by a skilled person based on an actual test situation. For example, X1=5 and X2=3.

It can be learned from Table 1 that a higher difference between the front windshield temperature and the dew point temperature indicates a lower fogging risk. When the difference is less than 0, it indicates that fogging occurs.

It should be further noted herein that, for ease of description, in this specification, the slight fogging risk, the high-risk fogging risk, and that fogging occurs are collectively referred to as having a fogging risk.

In addition, a seat sensor and a rainfall sensor may be further installed on the vehicle. Correspondingly, the detection data obtained by the air conditioner controller may further include a current quantity (Num) of inside-vehicle persons and current rainfall (WprSts). After the difference between the current front windshield temperature and the current dew point temperature is calculated, the difference may be adjusted. Specifically, adjustment may be performed according to the following formula:

$$N' = N - a \cdot Num - b \cdot SprSts$$

where a and b are constants, and values of a and b may be calibrated by a technical person based on an actual test situation.

After the difference is adjusted, the pre-stored fogging risk table is looked up based on the adjusted difference, to determine the fogging risk level. For example, if $X2 < N' \leq X1$, it may be determined that a current fogging risk level of the front windshield is L 1, that is, there is a slight fogging risk.

S103: Control a blower (3) to start, and control a first end of a semiconductor refrigeration chip (5) to cool if it is determined that the front windshield has the fogging risk.

In an implementation, the air conditioner controller may send a control instruction for the blower (3) to a power supply based on the current fogging risk. The control instruction is used to indicate power supplied by the power supply to the blower. Corresponding to the fogging risk levels, the power supplied to the blower (3) may also be classified into three levels. A higher fogging risk level indicates a higher level of the power supplied to the blower (3), that is, higher power.

The air conditioner controller may send a control instruction for the semiconductor refrigeration chip (5) to the power supply based on the current fogging risk of the windshield. The control instruction is used to indicate a direction (a current direction enabling the first end of the semiconductor refrigeration chip (5) to cool) in which the power supply outputs a current to the semiconductor refrigeration chip (5) and output power of the power supply for the semiconductor refrigeration chip (5). Similarly, corresponding to the fogging risk levels, the power supplied to the semiconductor refrigeration chip (5) may also be classified into three levels. A higher fogging risk level indicates a higher level of the power supplied to the semiconductor refrigeration chip (5), that is, higher power.

After the blower (3) starts, the blower (3) enables air to pass through a first heat dissipation structure (4), and the first heat dissipation structure (4) condenses water vapor in the air, so that the air passing through the first heat dissipation structure (4) is dry. Then, the dry air blows to the front windshield through an air exhaust vent of the air-conditioning air duct (2) for defogging. In winter, a driver may turn on an original heater in the vehicle air-conditioning box for heating. Therefore, the dry air passing through the air-conditioning air duct (2) may be heated by a heating component and blow to the front windshield for defogging.

S104: Control the blower (3) to start, and control the first end of the semiconductor refrigeration chip (5) to heat if it is determined that the front windshield has no fogging risk, and the current inside-vehicle temperature is less than a third threshold.

In an implementation, in winter with a relatively low temperature, even if the windshield has no fogging risk, the inside of the vehicle may still be heated when the inside-vehicle temperature is relatively low. The air conditioner controller controls the blower (3) to start, and controls the first end of the semiconductor refrigeration chip (5) to heat. Therefore, the first heat dissipation structure (4) also starts to heat. Air passing through the first heat dissipation structure (4) is dehumidified and heated, and becomes dry hot air and flows to the air-conditioning air duct (2), and then blows into the vehicle through the air vent of the air-conditioning air duct (2).

It should be noted herein that, in this case, the power supplied to the blower (3) or the power supplied to the semiconductor refrigeration chip (5) may be any one of the three power levels. For example, power of an intermediate level may be supplied.

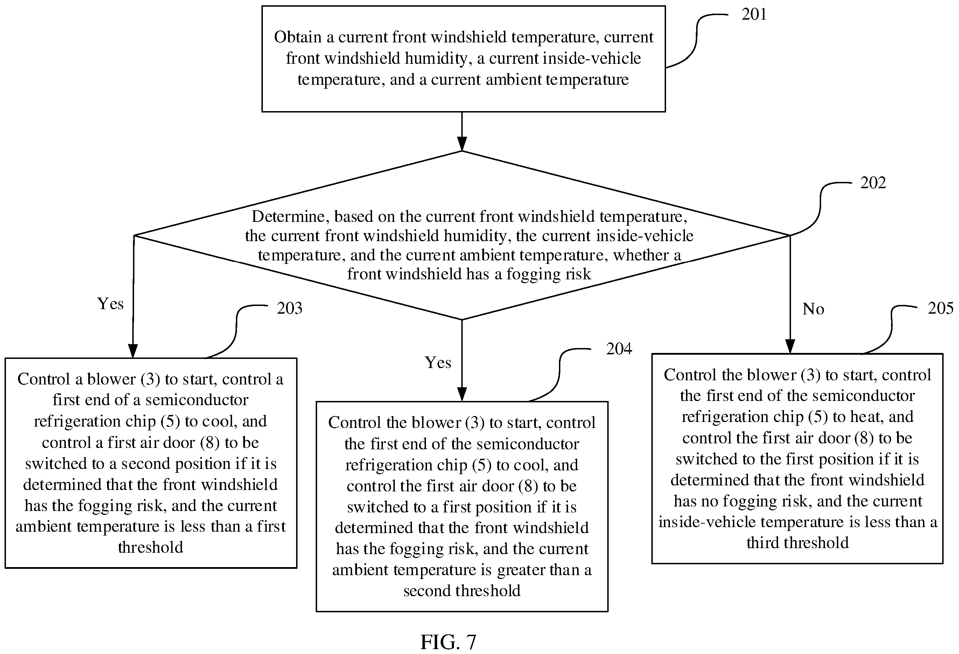

The following describes a method for controlling a vehicle air-conditioning box shown in FIG. 3. The control method may be implemented by an air conditioner controller. As shown in FIG. 7, a processing procedure of the method may include the following steps.

S201: Obtain a current front windshield temperature, current front windshield humidity, a current inside-vehicle temperature, and a current ambient temperature.

S202: Determine, based on the current front windshield temperature, the current front windshield humidity, the current inside-vehicle temperature, and the current ambient temperature, whether a front windshield has a fogging risk.

S203: Control a blower (3) to start, control a first end of a semiconductor refrigeration chip (5) to cool, and control a first air door (8) to be switched to a second position if it is determined that the front windshield has the fogging risk, and the current ambient temperature is less than a first threshold.

The first threshold may be set based on a requirement. For example, the first threshold may be set to a value between 0 degrees Celsius and 30 degrees Celsius below zero, for example, 5 degrees Celsius below zero.

In an implementation, in winter with a relatively low temperature, humidity inside a vehicle is relatively high and an ambient temperature is relatively low, and a windshield of the vehicle is prone to fog. The air conditioner controller controls the first end of the semiconductor refrigeration chip (5) to cool. Therefore, a first heat dissipation structure (4) also starts to cool. Correspondingly, a second end of the semiconductor refrigeration chip (5) heats, and heat is conducted to a second heat dissipation structure (6) through a heat conducting component (7). Therefore, the second heat dissipation structure (6) also starts to heat.

The blower (3) enables air to pass through the first heat dissipation structure (4), and the first heat dissipation structure (4) condenses water vapor in the air, so that the air passing through the first heat dissipation structure (4) is dry.

The air conditioner controller may send a first control instruction for the first air door (8) to a power supply. The first control instruction is used to indicate a voltage supplied to the first air door (8). When the voltage is applied to a motor of the first air door (8), the motor controls the first air door (8) to rotate to a second position, so that air transported through a first air duct section (101) can be heated by the second heat dissipation structure (6). Then, the heated air enters the air-conditioning air duct (2) through the second air communication opening (10), and then blows to the front windshield through an air vent of the air-conditioning air duct (2) for defogging.

S204: Control the blower (3) to start, control the first end of the semiconductor refrigeration chip (5) to cool, and control the first air door (8) to be switched to a first position if it is determined that the front windshield has the fogging risk, and the current ambient temperature is greater than a second threshold.

The second threshold may be set based on an actual requirement, and may be equal to the first threshold, or may be greater than the first threshold. For example, the second threshold may be set between 10 degrees Celsius and 30 degrees Celsius. Specifically, for example, the second threshold may be 20 degrees Celsius.

In an implementation, in rainy days in summer with a relatively high temperature, humidity outside the vehicle is relatively high and the ambient temperature is relatively high, and an inner surface of the front windshield is prone to fog. The air conditioner controller controls the first end of the semiconductor refrigeration chip (5) to cool. Therefore, the first heat dissipation structure (4) also starts to cool. Air passing through the first heat dissipation structure (4) is dehumidified and cooled, and becomes dry cold air. The air conditioner controller controls the first air door (8) to be located at the first position, so that the dry cold air can flow to the air-conditioning air duct (2) through a first air communication opening (9), and then blow to the front windshield through the air vent of the air-conditioning air duct (2) for defogging.

S205: Control the blower (3) to start, control the first end of the semiconductor refrigeration chip (5) to heat, and control the first air door (8) to be switched to the first position if it is determined that the front windshield has no fogging risk, and the current inside-vehicle temperature is less than a third threshold.

In an implementation, in winter with a relatively low temperature, even if the windshield has no fogging risk, the inside of the vehicle may still be heated when the inside-vehicle temperature is relatively low. The air conditioner controller controls the first end of the semiconductor refrigeration chip (5) to heat. Therefore, the first heat dissipation structure (4) also starts to heat. Air passing through the first heat dissipation structure (4) is dehumidified and heated, and becomes dry hot air The air conditioner controller controls the first air door (8) to be located at the first position, so that the dry hot air can flow to the air-conditioning air duct (2), and then blow into the vehicle through the air vent of the air-conditioning air duct (2).

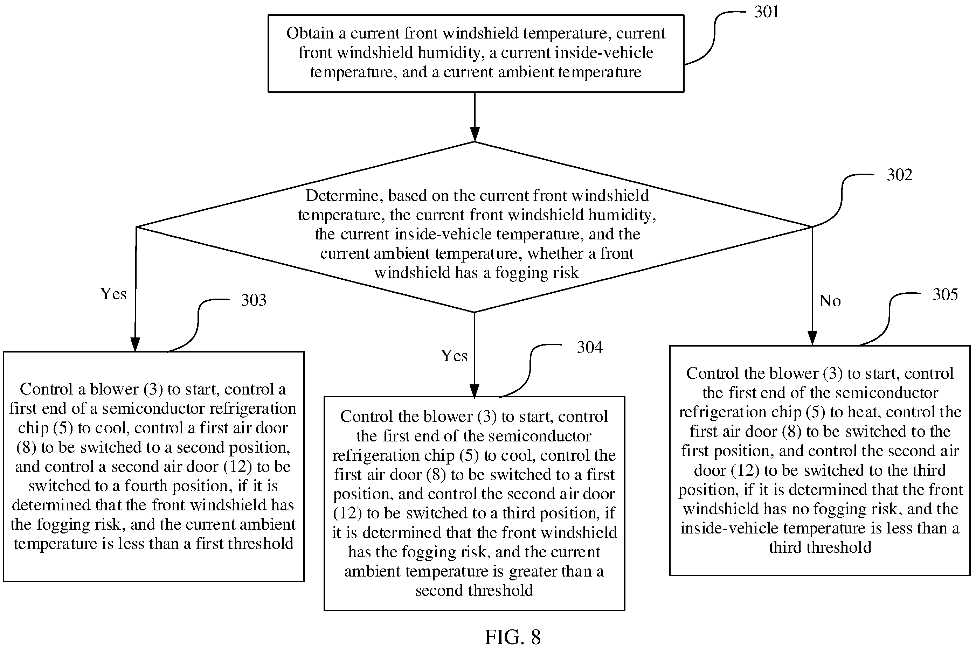

The following describes a method for controlling a vehicle air-conditioning box shown in FIG. 4. The control method may be implemented by an air conditioner controller. As shown in FIG. 8, a processing procedure of the method may include the following steps.

S301: Obtain a current front windshield temperature, current front windshield humidity, a current inside-vehicle temperature, and a current ambient temperature.

S302: Determine, based on the current front windshield temperature, the current front windshield humidity, the current inside-vehicle temperature, and the current ambient temperature, whether a front windshield has a fogging risk.

S303: Control a blower (3) to start, control a first end of a semiconductor refrigeration chip (5) to cool, control a first air door (8) to be switched to a second position, and control a second air door (12) to be switched to a fourth position, if it is determined that the front windshield has the fogging risk, and the current ambient temperature is less than a first threshold.

In an implementation, in winter with a relatively low temperature, humidity inside a vehicle is relatively high and an ambient temperature is relatively low, and a windshield of the vehicle is prone to fog. The air conditioner controller controls the first end of the semiconductor refrigeration chip (5) to cool. Therefore, a first heat dissipation structure (4) also starts to cool. Correspondingly, a second end of the semiconductor refrigeration chip (5) heats, and heat is conducted to a second heat dissipation structure (6) through a heat conducting component (7). Therefore, the second heat dissipation structure (6) also starts to heat. The blower (3) enables air to pass through the first heat dissipation structure (4), and the first heat dissipation structure (4) condenses water vapor in the air, so that the air passing through the first heat dissipation structure (4) is dry.

The air conditioner controller controls the first air door (8) to rotate to the second position, so that air transported through a first air duct section (101) may be heated by the second heat dissipation structure (6), and becomes dry hot air

In addition, the air conditioner controller may further control the second air door (12) to rotate to the fourth position, so that the heated air does not flow to the outside of the vehicle, but flows to the air-conditioning air duct (2) through a second air communication opening (10), and then blows to the front windshield through an air vent of the air-conditioning air duct (2) for defogging.

S304: Control the blower (3) to start, control the first end of the semiconductor refrigeration chip (5) to cool, control the first air door (8) to be switched to a first position, and control the second air door (12) to be switched to a third position, if it is determined that the front windshield has the fogging risk, and the current ambient temperature is greater than a second threshold.

In an implementation, in rainy days in summer with a relatively high temperature, humidity outside the vehicle is relatively high and the ambient temperature is relatively high, and an inner surface of the front windshield is prone to fog. The air conditioner controller controls the first end of the semiconductor refrigeration chip (5) to cool. Therefore, a first heat dissipation structure (4) also starts to cool. Air passing through the first heat dissipation structure (4) is dehumidified and cooled, and becomes dry cold air. The air conditioner controller controls the first air door (8) to be located at the first position, so that the dry cold air can flow to the air-conditioning air duct (2) through a first air communication opening (9), and then blow to the front windshield through the air vent of the air-conditioning air duct (2) for defogging.

In addition, the air conditioner controller may further control the second air door (12) to be switched to the third position, so that a part of air that passes through a gap between the first electric control air door (8) and the main air duct (1) passes through the second heat dissipation structure (6), is transported to the outside-vehicle air outlet duct (11), and is expelled to the outside of the vehicle.

S305: Control the blower (3) to start, control the first end of the semiconductor refrigeration chip (5) to heat, control the first air door (8) to be switched to the first position, and control the second air door (12) to be switched to the third position, if it is determined that the front windshield has no fogging risk, and the inside-vehicle temperature is less than a third threshold.

In an implementation, in winter with a relatively low temperature, even if the windshield has no fogging risk, the inside of the vehicle may still be heated when the inside-vehicle temperature is relatively low. The air conditioner controller controls the first end of the semiconductor refrigeration chip (5) to heat. Therefore, the first heat dissipation structure (4) also starts to heat. Air passing through the first heat dissipation structure (4) is dehumidified and heated, and becomes dry hot air The air conditioner controller controls the first air door (8) to be located at the first position, so that the dry hot air can flow to the air-conditioning air duct (2) through the second air communication opening (10), and then blow into the vehicle through the air vent of the air-conditioning air duct (2).

In addition, the air conditioner controller may further control the second air door (12) to be switched to the third position, so that a part of air that passes through a gap between the first electric control air door (8) and the main air duct (1) passes through the second heat dissipation structure (6), is transported to the outside-vehicle air outlet duct (11), and is expelled to the outside of the vehicle.

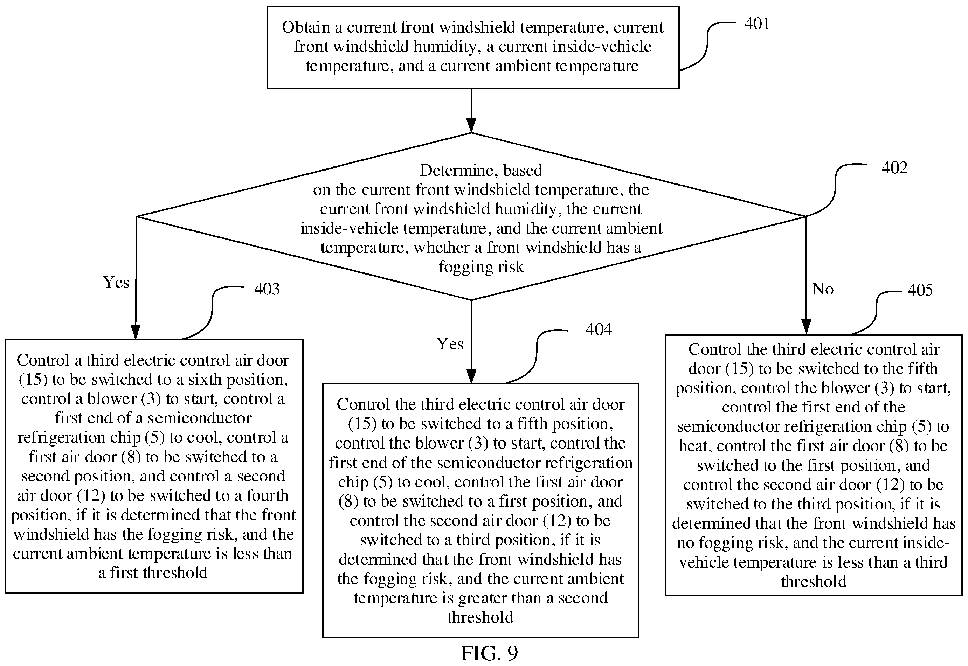

The following describes a method for controlling a vehicle air-conditioning box shown in FIG. 5. The control method may be implemented by an air conditioner controller. As shown in FIG. 9, a processing procedure of the method may include the following steps.

S401: Obtain a current front windshield temperature, current front windshield humidity, a current inside-vehicle temperature, and a current ambient temperature.

S402: Determine, based on the current front windshield temperature, the current front windshield humidity, the current inside-vehicle temperature, and the current ambient temperature, whether a front windshield has a fogging risk.

S403: Control a third electric control air door (15) to be switched to a sixth position, control a blower (3) to start, control a first end of a semiconductor refrigeration chip (5) to cool, control a first air door (8) to be switched to a second position, and control a second air door (12) to be switched to a fourth position, if it is determined that the front windshield has the fogging risk, and the current ambient temperature is less than a first threshold.

In an implementation, in winter with a relatively low temperature, humidity inside a vehicle is relatively high and an ambient temperature is relatively low, and a windshield of the vehicle is prone to fog.

The air conditioner controller may control the third electric control air door (15) to be switched to the sixth position, so that an outside-vehicle air inlet duct (13) is in communication with a first air duct section (101), and relatively dry air outside the vehicle flows from the outside-vehicle air inlet duct (13) to the vehicle air-conditioning box. In this way, less water can be condensed during refrigeration and dehumidification.

The air conditioner controller controls the first end of the semiconductor refrigeration chip (5) to cool. Therefore, a first heat dissipation structure (4) also starts to cool. Correspondingly, a second end of the semiconductor refrigeration chip (5) heats, and heat is conducted to a second heat dissipation structure (6) through a heat conducting component (7). Therefore, the second heat dissipation structure (6) also starts to heat. The blower (3) enables air to pass through the first heat dissipation structure (4), and the first heat dissipation structure (4) condenses water vapor in the air, so that the air passing through the first heat dissipation structure (4) is dry.

The air conditioner controller controls the first air door (8) to rotate to the second position, so that air transported through a first air duct section (101) may be heated by the second heat dissipation structure (6), and becomes dry hot air

In addition, the air conditioner controller may further control the second air door (12) to rotate to the fourth position, so that the heated air does not flow to the outside of the vehicle, but enters the air-conditioning air duct (2) through a second air communication opening (10), and then blows to the front windshield through an air vent of the air-conditioning air duct (2) for defogging.

S404: Control the third electric control air door (15) to be switched to a fifth position, control the blower (3) to start, control the first end of the semiconductor refrigeration chip (5) to cool, control the first air door (8) to be switched to a first position, and control the second air door (12) to be switched to a third position, if it is determined that the front windshield has the fogging risk, and the current ambient temperature is greater than a second threshold.

In an implementation, in rainy days in summer with a relatively high temperature, humidity outside the vehicle is relatively high and the ambient temperature is relatively high, and an inner surface of the front windshield is prone to fog.

The air conditioner controller may control the third electric control air door (15) to rotate to the fifth position, so that an inside-vehicle air inlet duct (14) is in communication with the first air duct section (101), and relatively dry air inside the vehicle flows from the inside-vehicle air inlet duct (14) to the vehicle air-conditioning box. In this way, less water can be condensed during refrigeration and dehumidification.

The air conditioner controller controls the first end of the semiconductor refrigeration chip (5) to cool. Therefore, a first heat dissipation structure (4) also starts to cool. Air passing through the first heat dissipation structure (4) is dehumidified and cooled, and becomes dry cold air. The air conditioner controller controls the first air door (8) to be located at the first position, so that the dry cold air can enter the air-conditioning air duct (2) through a first air communication opening (9), and then blow to the front windshield through the air vent of the air-conditioning air duct (2) for defogging.

In addition, the air conditioner controller may further control the second air door (12) to be switched to the third position, so that a part of air that passes through a gap between the first electric control air door (8) and the main air duct (1) passes through the second heat dissipation structure (6), is transported to the outside-vehicle air outlet duct (11), and is expelled to the outside of the vehicle.

S405: Control the third electric control air door (15) to be switched to the fifth position, control the blower (3) to start, control the first end of the semiconductor refrigeration chip (5) to heat, control the first air door (8) to be switched to the first position, and control the second air door (12) to be switched to the third position, if it is determined that the front windshield has no fogging risk, and the current inside-vehicle temperature is less than a third threshold.

In an implementation, in winter with a relatively low temperature, even if the windshield has no fogging risk, the inside of the vehicle may still be heated when the inside-vehicle temperature is relatively low.

The air conditioner controller may control the third electric control air door (15) to rotate to the fifth position, so that an inside-vehicle air inlet duct (14) is in communication with the first air duct section (101), and air with a relatively high temperature outside the vehicle flows from the inside-vehicle air inlet duct (14) to the vehicle air-conditioning box.

The air conditioner controller controls the first end of the semiconductor refrigeration chip (5) to heat. Therefore, the first heat dissipation structure (4) also starts to heat. Air passing through the first heat dissipation structure (4) is dehumidified and heated, and becomes dry hot air. The air conditioner controller controls the first air door (8) to be located at the first position, so that the dry hot air can enter the air-conditioning air duct (2) through the second air communication opening (10), and then blow into the vehicle through the air vent of the air-conditioning air duct (2).

In addition, the air conditioner controller may further control the second air door (12) to be switched to the third position, so that a part of air that passes through a gap between the first electric control air door (8) and the main air duct (1) passes through the second heat dissipation structure (6), is transported to the outside-vehicle air outlet duct (11), and is expelled to the outside of the vehicle.

For the foregoing method, it should be noted that specific implementations of S201, S301, and S401 are the same as the specific implementation of S101, and specific implementations of S202, S302, and S402 are the same as the specific implementation of S102. Details are not described herein again.

In an example of an embodiment, a computer-readable storage medium is further provided. The storage medium stores at least one instruction, and the at least one instruction is loaded and executed by a processor to implement the method for controlling a vehicle air-conditioning box in the foregoing embodiments.

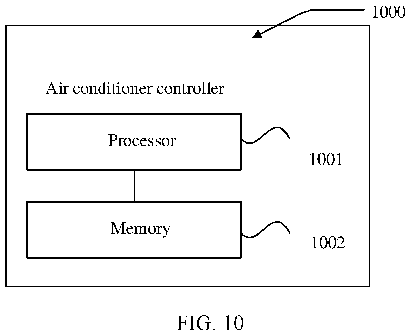

FIG. 10 is a schematic diagram of a structure of an air conditioner controller according to an embodiment of this invention. The air conditioner controller 1000 may greatly differ due to different configurations or performance, and may include one or more processors (central processing units, CPU) 1001 and one or more memories 1002. The memory 1002 stores at least one instruction, and the at least one instruction is loaded and executed by the processor 1001 to implement the method for controlling a vehicle air-conditioning box in the foregoing embodiments.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely embodiments of this invention, but not intended to limit this invention.

**Claims**

1. A vehicle air-conditioning box, comprising: a main air duct (1), an air-conditioning air duct (2), a blower (3), a first heat dissipation structure (4), and a semiconductor refrigeration chip (5), wherein

   the main air duct (1) is in communication with the air-conditioning air duct (2);
   the blower (3), the first heat dissipation structure (4), and the semiconductor refrigeration chip (5) are disposed in the main air duct (1); and
   a first end of the semiconductor refrigeration chip (5) is in contact with the first heat dissipation structure (4), the vehicle air-conditioning box further comprises a second heat dissipation structure (6), a heat conducting component (7), and a first electric control air door (8), wherein a second end of the semiconductor refrigeration chip (5) is connected to the second heat dissipation structure (6) through the heat conducting component (7), **characterized in that**
   a first air communication opening (9) and a second air communication opening (10) are disposed between the main air duct (1) and the air-conditioning air duct (2), the first air communication opening (9) is located between a first air duct section (101) of the main air duct (1) and the air-conditioning air duct (2), and the second air communication opening (10) is located between a second air duct section (102) of the main air duct (1) and the air-conditioning air duct (2);
   the first electric control air door (8) is disposed at the first air communication opening (9), when the first electric control air door (8) is located at a first position, the first electric control air door (8) blocks the first air duct section (101) from the second air duct section (102), and the first air duct section (101) is in communication with the air-conditioning air duct (2), and when the first electric control air door (8) is located at a second position, the first electric control air door (8) blocks the first air duct section (101) from the air-conditioning air duct (2), and the first air duct section (101) is in communication with the second air duct section (102); and
   the second heat dissipation structure (6) is disposed in the second air duct section (102).

2. The vehicle air-conditioning box according to claim 1, wherein the vehicle air-conditioning box further comprises an outside-vehicle air outlet duct (11) and a second electric control air door (12);

   one end of the outside-vehicle air outlet duct (11) is connected to the second air duct section (102); and
   the second electric control air door (12) is disposed at the second air communication opening (10), when the second electric control air door (12) is located at a third position, the second electric control air door (12) blocks the second air duct section (102) from the air-conditioning air duct (2), and when the second electric control air door (12) is located at a fourth position, the second electric control air door (12) blocks the outside-vehicle air outlet duct (11) from the second air duct section (102).

3. The vehicle air-conditioning box according to claim 2, wherein the vehicle air-conditioning box further comprises an outside-vehicle air inlet duct (13), an inside-vehicle air inlet duct (14), and a third electric control air door (15);

   one end of the outside-vehicle air inlet duct (13) is connected to the inside-vehicle air inlet duct (14), and is connected to the first air duct section (101);
   one end of the inside-vehicle air inlet duct (14) is connected to the outside-vehicle air inlet duct (13), and is connected to the first air duct section (101); and
   the third electric control air door (15) is disposed at a joint between the inside-vehicle air inlet duct (14) and the outside-vehicle air inlet duct (13), when the third electric control air door (15) is located at a fifth position, the third electric control air door (15) blocks the outside-vehicle air inlet duct (13) from the first air duct section (101), and blocks the outside-vehicle air inlet duct (13) from the inside-vehicle air inlet duct (14), and when the third electric control air door (15) is located at a sixth position, the third electric control air door (15) blocks the inside-vehicle air inlet duct (14) from the first air duct section (101), and blocks the inside-vehicle air inlet duct (14) from the outside-vehicle air inlet duct (13).

4. The vehicle air-conditioning box according to any one of claims 1 to 3, wherein the heat conducting component (7) is a copper pipe.

5. A method for controlling a vehicle air-conditioning box, wherein the method is applied to the vehicle air-conditioning box according to any one of claims 1 to 4, and the method being **characterized by**:

   obtaining a current front windshield temperature, a current front windshield humidity, a current inside-vehicle temperature, and a current ambient temperature;

determining, based on the current front windshield temperature, the current front windshield humidity, the current inside-vehicle temperature, and the current ambient temperature, whether a front windshield has a fogging risk;

controlling the blower (3) to start, and controlling the first end of the semiconductor refrigeration chip (5) to cool if it is determined that the front windshield has the fogging risk, and

controlling the blower (3) to start, and controlling the first end of the semiconductor refrigeration chip (5) to heat if it is determined that the front windshield has no fogging risk, and the current inside-vehicle temperature is less than a third threshold;

wherein the controlling the blower (3) to start, and controlling the first end of the semiconductor refrigeration chip (5) to cool if it is determined that the front windshield has the fogging risk comprises:

controlling the blower (3) to start, controlling the first end of the semiconductor refrigeration chip (5) to cool, and controlling the first electric control air door (8) to be switched to the second position if it is determined that the front windshield has the fogging risk, and the current ambient temperature is less than a first threshold; and

wherein the controlling the blower (3) to start, and controlling the first end of the semiconductor refrigeration chip (5) to heat if it is determined that the front windshield has no fogging risk, and the current inside-vehicle temperature is less than the third threshold comprises:

controlling the blower (3) to start, controlling the first end of the semiconductor refrigeration chip (5) to heat, and controlling the first electric control air door (8) to be switched to the first position if it is determined that the front windshield has no fogging risk, and the current inside-vehicle temperature is less than the third threshold.

6. The method according to claim 5, wherein the method further comprises:

controlling the blower (3) to start, controlling the first end of the semiconductor refrigeration chip (5) to cool, and controlling the first electric control air door (8) to be switched to the first position if it is determined that the front windshield has the fogging risk, and the current ambient temperature is greater than a second threshold.

7. The method according to claim 6, wherein the method is applied to the vehicle air-conditioning box according to claim 2;

the controlling the blower (3) to start, controlling the first end of the semiconductor refrigeration chip (5) to cool, and controlling the first electric control air door (8) to be switched to the second position if it is determined that the front windshield has the fogging risk, and the current ambient temperature is less than the first threshold comprises:

controlling the blower (3) to start, controlling the first end of the semiconductor refrigeration chip (5) to cool, controlling the first electric control air door (8) to be switched to the second position, and controlling the second electric control air door (12) to be switched to the fourth position, if it is determined that the front windshield has the fogging risk, and the current ambient temperature is less than the first threshold;

the controlling the blower (3) to start, controlling the first end of the semiconductor refrigeration chip (5) to cool, and controlling the first electric control air door (8) to be switched to the first position if it is determined that the front windshield has the fogging risk, and the current ambient temperature is greater than the second threshold comprises:

controlling the blower (3) to start, controlling the first end of the semiconductor refrigeration chip (5) to cool, controlling the first electric control air door (8) to be switched to the first position, and controlling the second electric control air door (12) to be switched to the third position, if it is determined that the front windshield has the fogging risk, and the current ambient temperature is greater than the second threshold; and

the controlling the blower (3) to start, controlling the first end of the semiconductor refrigeration chip (5) to heat, and controlling the first electric control air door (8) to be switched to the first position if it is determined that the front windshield has no fogging risk, and the current inside-vehicle temperature is less than the third threshold comprises:

controlling the blower (3) to start, controlling the first end of the semiconductor refrigeration chip (5) to heat, controlling the first electric control air door (8) to be switched to the first position, and controlling the second electric control air door (12) to be switched to the third position, if it is determined that the front windshield has no fogging risk, and the current inside-vehicle temperature is less than the third threshold.

8. The method according to claim 7, wherein the method is applied to the vehicle air-conditioning box according to claim 3;

the controlling the blower (3) to start, controlling the first end of the semiconductor refrigeration chip (5) to cool, controlling the first electric control air door (8) to be switched to the second position, and controlling the second electric control air door (12) to be switched to the fourth position, if it is determined that the front windshield has the fogging risk, and the current ambient temperature is less than the first threshold comprises:

controlling the third electric control air door (15) to be switched to the sixth position, controlling the blower (3) to start, controlling the first end of the semiconductor refrigeration chip (5) to cool, controlling the first electric control air door (8) to be switched to the second position, and controlling the second electric control air door (12) to be switched to the fourth position, if it is determined that the front windshield has the fogging risk, and the current ambient temperature is less than the first threshold;
the controlling the blower (3) to start, controlling the first end of the semiconductor refrigeration chip (5) to cool, controlling the first electric control air door (8) to be switched to the first position, and controlling the second electric control air door (12) to be switched to the third position, if it is determined that the front windshield has the fogging risk, and the current ambient temperature is greater than the second threshold comprises:

controlling the third electric control air door (15) to be switched to the fifth position, controlling the blower (3) to start, controlling the first end of the semiconductor refrigeration chip (5) to cool, controlling the first electric control air door (8) to be switched to the first position, and controlling the second electric control air door (12) to be switched to the third position, if it is determined that the front windshield has the fogging risk, and the current ambient temperature is greater than the second threshold; and
the controlling the blower (3) to start, controlling the first end of the semiconductor refrigeration chip (5) to heat, controlling the first electric control air door (8) to be switched to the first position, and controlling the second electric control air door (12) to be switched to the third position, if it is determined that the front windshield has no fogging risk, and the current inside-vehicle temperature is less than the third threshold comprises:
controlling the third electric control air door (15) to be switched to the fifth position, controlling the blower (3) to start, controlling the first end of the semiconductor refrigeration chip (5) to heat, controlling the first electric control air door (8) to be switched to the first position, and controlling the second electric control air door (12) to be switched to the third position, if it is determined that the front windshield has no fogging risk, and the current inside-vehicle temperature is less than the third threshold.

9. The method according to any one of claims 5 to 8, wherein the determining, based on the current front windshield temperature, the current front windshield humidity, the current inside-vehicle temperature, and the current ambient temperature, whether a front windshield has a fogging risk comprises:

determining a current dew point temperature based on the current front windshield humidity and the current inside-vehicle temperature;
calculating a difference between the current front windshield temperature and the current dew point temperature; and
determining, based on the difference, whether the front windshield has the fogging risk.

10. The method according to claim 9, wherein the obtaining a current front windshield temperature, a current front windshield humidity, a current inside-vehicle temperature, and a current ambient temperature comprises:

obtaining the current front windshield temperature, the current front windshield humidity, the current inside-vehicle temperature, the current ambient temperature, a current quantity of inside-vehicle persons, and a current rainfall amount; and
the determining, based on the difference, whether the front windshield has the fogging risk comprises:
adjusting the difference based on the current quantity of inside-vehicle persons and the current rainfall amount, and determining, based on an adjusted difference, whether the front windshield has the fogging risk.

11. An air conditioner controller, wherein the air conditioner controller comprises a processor and a memory, the memory stores at least one instruction, and the instruction is loaded and executed by the processor to implement an operation performed in the method according to any one of claims 5 to 10.

12. A vehicle defogging system, wherein the vehicle defogging system comprises the air conditioner controller according to claim 11 and the vehicle air-conditioning box according to any one of claims 1 to 4.

**EP 4 219 198 B1**

**Patentansprüche**

1. Fahrzeugklimaanlagenbox, umfassend: einen Hauptluftkanal (1), einen Klimaanlagenluftkanal (2), ein Gebläse (3), eine erste Wärmeableitungsstruktur (4) und einen Halbleiterkühlchip (5), wobei

   der Hauptluftkanal (1) in Verbindung mit dem Klimaanlagenluftkanal (2) steht;
   das Gebläse (3), die erste Wärmeableitungsstruktur (4) und der Halbleiterkühlchip (5) in dem Hauptluftkanal (1) angeordnet sind; und
   ein erstes Ende des Halbleiterkühlchips (5) in Kontakt mit der ersten Wärmeableitungsstruktur (4) steht, die Fahrzeugklimaanlagenbox ferner eine zweite Wärmeableitungsstruktur (6), eine wärmeleitende Komponente (7) und eine erste elektrisch gesteuerte Luftklappe (8) umfasst, wobei ein zweites Ende des Halbleiterkühlchips (5) über die wärmeleitende Komponente (7) mit der zweiten Wärmeableitungsstruktur (6) verbunden ist, **dadurch gekennzeichnet, dass**
   eine erste Luftverbindungsöffnung (9) und eine zweite Luftverbindungsöffnung (10) zwischen dem Hauptluftkanal (1) und dem Klimaanlagenluftkanal (2) angeordnet sind, sich die erste Luftverbindungsöffnung (9) zwischen einem ersten Luftkanalabschnitt (101) des Hauptluftkanals (1) und dem Klimaanlagenluftkanal (2) befindet und sich die zweite Luftverbindungsöffnung (10) zwischen einem zweiten Luftkanalabschnitt (102) des Hauptluftkanals (1) und dem Klimaanlagenluftkanal (2) befindet;
   die erste elektrisch gesteuerte Luftklappe (8) an der ersten Luftverbindungsöffnung (9) angeordnet ist, wobei, wenn sich die erste elektrisch gesteuerte Luftklappe (8) an einer ersten Position befindet, die erste elektrisch gesteuerte Luftklappe (8) den ersten Luftkanalabschnitt (101) von dem zweiten Luftkanalabschnitt (102) absperrt und der erste Luftkanalabschnitt (101) in Verbindung mit dem Klimaanlagenluftkanal (2) steht und, wenn sich die erste elektrisch gesteuerte Luftklappe (8) an einer zweiten Position befindet, die erste elektrisch gesteuerte Luftklappe (8) den ersten Luftkanalabschnitt (101) von dem Klimaanlagenluftkanal (2) absperrt und der erste Luftkanalabschnitt (101) in Verbindung mit dem zweiten Luftkanalabschnitt (102) steht; und
   die zweite Wärmeableitungsstruktur (6) in dem zweiten Luftkanalabschnitt (102) angeordnet ist.

2. Fahrzeugklimaanlagenbox nach Anspruch 1, wobei die Fahrzeugklimaanlagenbox ferner einen fahrzeugaußenseitigen Luftauslasskanal (11) und eine zweite elektrisch gesteuerte Luftklappe (12) umfasst;

   ein Ende des fahrzeugaußenseitigen Luftauslasskanals (11) mit dem zweiten Luftkanalabschnitt (102) verbunden ist; und
   die zweite elektrisch gesteuerte Luftklappe (12) an der zweiten Luftverbindungsöffnung (10) angeordnet ist, wobei, wenn sich die zweite elektrisch gesteuerte Luftklappe (12) an einer dritten Position befindet, die zweite elektrisch gesteuerte Luftklappe (12) den zweiten Luftkanalabschnitt (102) von dem Klimaanlagenluftkanal (2) absperrt und, wenn sich die zweite elektrisch gesteuerte Luftklappe (12) an einer vierten Position befindet, die zweite elektrisch gesteuerte Luftklappe (12) den fahrzeugaußenseitigen Luftauslasskanal (11) von dem zweiten Luftkanalabschnitt (102) absperrt.

3. Fahrzeugklimaanlagenbox nach Anspruch 2, wobei die Fahrzeugklimaanlagenbox ferner einen fahrzeugaußenseitigen Lufteinlasskanal (13), einen fahrzeuginnenseitigen Lufteinlasskanal (14) und eine dritte elektrisch gesteuerte Luftklappe (15) umfasst;

   ein Ende des fahrzeugaußenseitigen Lufteinlasskanals (13) mit dem fahrzeuginnenseitigen Lufteinlasskanal (14) verbunden ist und mit dem ersten Luftkanalabschnitt (101) verbunden ist;
   ein Ende des fahrzeuginnenseitigen Lufteinlasskanals (14) mit dem fahrzeugaußenseitigen Lufteinlasskanal (13) verbunden ist und mit dem ersten Luftkanalabschnitt (101) verbunden ist; und die dritte elektrisch gesteuerte Luftklappe (15) an einer Verbindung zwischen dem fahrzeuginnenseitigen Lufteinlasskanal (14) und dem fahrzeugaußenseitigen Lufteinlasskanal (13) angeordnet ist, wobei, wenn sich die dritte elektrisch gesteuerte Luftklappe (15) an einer fünften Position befindet, die dritte elektrisch gesteuerte Luftklappe (15) den fahrzeugaußenseitigen Lufteinlasskanal (13) von dem ersten Luftkanalabschnitt (101) absperrt und den fahrzeugaußenseitigen Lufteinlasskanal (13) von dem fahrzeuginnenseitigen Lufteinlasskanal (14) absperrt und, wenn sich die dritte elektrisch gesteuerte Luftklappe (15) an einer sechsten Position befindet, die dritte elektrisch gesteuerte Luftklappe (15) den fahrzeuginnenseitigen Lufteinlasskanal (14) von dem ersten Luftkanalabschnitt (101) absperrt und den fahrzeuginnenseitigen Lufteinlasskanal (14) von dem fahrzeugaußenseitigen Lufteinlasskanal (13) absperrt.

4. Fahrzeugklimaanlagenbox nach einem der Ansprüche 1 bis 3, wobei die wärmeleitende Komponente (7) ein Kupferrohr ist.

5. Verfahren zum Steuern einer Fahrzeugklimaanlagenbox, wobei das Verfahren auf die Fahrzeugklimaanlagenbox nach einem der Ansprüche 1 bis 4 angewendet wird und das Verfahren durch Folgendes gekennzeichnet ist:

Erlangen einer aktuellen Temperatur der vorderen Windschutzscheibe, einer aktuellen Feuchtigkeit der vorderen Windschutzscheibe, einer aktuellen Fahrzeuginnentemperatur und einer aktuellen Umgebungstemperatur;
Bestimmen, basierend auf der aktuellen Temperatur der vorderen Windschutzscheibe, der aktuellen Feuchtigkeit der vorderen Windschutzscheibe, der aktuellen Fahrzeuginnentemperatur und der aktuellen Umgebungstemperatur, ob bei einer vorderen Windschutzscheibe ein Risiko eines Beschlagens besteht;
Steuern des Gebläses (3), um zu starten, und Steuern des ersten Endes des Halbleiterkühlchips (5), um zu kühlen, wenn bestimmt wird, dass bei der vorderen Windschutzscheibe das Risiko eines Beschlagens besteht, und
Steuern des Gebläses (3), um zu starten, und Steuern des ersten Endes des Halbleiterkühlchips (5), um zu erwärmen, wenn bestimmt wird, dass bei der vorderen Windschutzscheibe kein Risiko eines Beschlagens besteht, und die aktuelle Fahrzeuginnentemperatur geringer als ein dritter Schwellenwert ist;
wobei das Steuern des Gebläses (3), um zu starten, und das Steuern des ersten Endes des Halbleiterkühlchips (5), um zu kühlen, wenn bestimmt wird, dass bei der vorderen Windschutzscheibe das Risiko eines Beschlagens besteht, Folgendes umfassen:

Steuern des Gebläses (3), um zu starten, Steuern des ersten Endes des Halbleiterkühlchips (5), um zu kühlen, und Steuern der ersten elektrisch gesteuerten Luftklappe (8), um zu der zweiten Position umgeschaltet zu werden, wenn bestimmt wird, dass bei der vorderen Windschutzscheibe das Risiko eines Beschlagens besteht und die aktuelle Umgebungstemperatur geringer als ein erster Schwellenwert ist; und
wobei das Steuern des Gebläses (3), um zu starten, und das Steuern des ersten Endes des Halbleiterkühlchips (5), um zu erwärmen, wenn bestimmt wird, dass bei der vorderen Windschutzscheibe kein Risiko eines Beschlagens besteht, und die aktuelle Fahrzeuginnentemperatur geringer als der dritte Schwellenwert ist, Folgendes umfassen:
Steuern des Gebläses (3), um zu starten, Steuern des ersten Endes des Halbleiterkühlchips (5), um zu erwärmen, und Steuern der ersten elektrisch gesteuerten Luftklappe (8), um zu der ersten Position umgeschaltet zu werden, wenn bestimmt wird, dass bei der vorderen Windschutzscheibe kein Risiko eines Beschlagens besteht und die aktuelle Fahrzeuginnentemperatur geringer als der dritte Schwellenwert ist.

6. Verfahren nach Anspruch 5, wobei das Verfahren ferner Folgendes umfasst:
Steuern des Gebläses (3), um zu starten, Steuern des ersten Endes des Halbleiterkühlchips (5), um zu kühlen, und Steuern der ersten elektrisch gesteuerten Luftklappe (8), um zu der ersten Position umgeschaltet zu werden, wenn bestimmt wird, dass bei der vorderen Windschutzscheibe das Risiko eines Beschlagens besteht und die aktuelle Umgebungstemperatur größer als ein zweiter Schwellenwert ist.

7. Verfahren nach Anspruch 6, wobei das Verfahren auf die Fahrzeugklimaanlagenbox nach Anspruch 2 angewendet wird;
das Steuern des Gebläses (3), um zu starten, und das Steuern des ersten Endes des Halbleiterkühlchips (5), um zu kühlen, und Steuern der ersten elektrisch gesteuerten Luftklappe (8), um zu der zweiten Position umgeschaltet zu werden, wenn bestimmt wird, dass bei der vorderen Windschutzscheibe das Risiko eines Beschlagens besteht und die aktuelle Umgebungstemperatur geringer als der erste Schwellenwert ist, Folgendes umfassen:

Steuern des Gebläses (3), um zu starten, Steuern des ersten Endes des Halbleiterkühlchips (5), um zu kühlen, Steuern der ersten elektrisch gesteuerten Luftklappe (8), um zu der zweiten Position umgeschaltet zu werden, und Steuern der zweiten elektrisch gesteuerten Luftklappe (12), um zu der vierten Position umgeschaltet zu werden, wenn bestimmt wird, dass bei der vorderen Windschutzscheibe das Risiko eines Beschlagens besteht und die aktuelle Umgebungstemperatur geringer als der erste Schwellenwert ist;
das Steuern des Gebläses (3), um zu starten, das Steuern des ersten Endes des Halbleiterkühlchips (5), um zu kühlen, und das Steuern der ersten elektrisch gesteuerten Luftklappe (8), um zu der ersten Position umgeschaltet zu werden, wenn bestimmt wird, dass bei der vorderen Windschutzscheibe das Risiko eines Beschlagens besteht, und die aktuelle Umgebungstemperatur größer als der zweite Schwellenwert ist, Folgendes umfassen:

Steuern des Gebläses (3), um zu starten, und Steuern des ersten Endes des Halbleiterkühlchips (5), um zu kühlen, Steuern der ersten elektrisch gesteuerten Luftklappe (8), um zu der ersten Position umgeschaltet zu werden, und Steuern der zweiten elektrisch gesteuerten Luftklappe (12), um zu der dritten Position umgeschaltet zu werden, wenn bestimmt wird, dass bei der vorderen Windschutzscheibe das Risiko eines Beschlagens besteht und die aktuelle Umgebungstemperatur größer als der zweite Schwellenwert ist; das Steuern des Gebläses (3), um zu starten, das Steuern des ersten Endes des Halbleiterkühlchips (5), um zu erwärmen, und das Steuern der ersten elektrisch gesteuerten Luftklappe (8), um zu der ersten Position umgeschaltet zu werden, wenn bestimmt wird, dass bei der vorderen Windschutzscheibe kein Risiko eines Beschlagens besteht, und die aktuelle Fahrzeuginnentemperatur geringer als der dritte Schwellenwert ist, Folgendes umfassen: Steuern des Gebläses (3), um zu starten, und Steuern des ersten Endes des Halbleiterkühlchips (5), um zu erwärmen, Steuern der ersten elektrisch gesteuerten Luftklappe (8), um zu der ersten Position umgeschaltet zu werden, und Steuern der zweiten elektrisch gesteuerten Luftklappe (12), um zu der dritten Position umgeschaltet zu werden, wenn bestimmt wird, dass bei der vorderen Windschutzscheibe kein Risiko eines Beschlagens besteht und die aktuelle Fahrzeuginnentemperatur größer als der dritte Schwellenwert ist.

8. Verfahren nach Anspruch 7, wobei das Verfahren auf die Fahrzeugklimaanlagenbox nach Anspruch 3 angewendet wird; das Steuern des Gebläses (3), um zu starten, das Steuern des ersten Endes des Halbleiterkühlchips (5), um zu kühlen, das Steuern der ersten elektrisch gesteuerten Luftklappe (8), um zu der zweiten Position umgeschaltet zu werden, und das Steuern der zweiten elektrisch gesteuerten Luftklappe (12), um zu der vierten Position umgeschaltet zu werden, wenn bestimmt wird, dass bei der vorderen Windschutzscheibe das Risiko eines Beschlagens besteht, und die aktuelle Umgebungstemperatur geringer als der erste Schwellenwert ist, Folgendes umfassen:

Steuern der dritten elektrisch gesteuerten Luftklappe (15), um zu der sechsten Position umgeschaltet zu werden, Steuern des Gebläses (3), um zu starten, Steuern des ersten Endes des Halbleiterkühlchips (5), um zu kühlen, Steuern der ersten elektrisch gesteuerten Luftklappe (8), um zu der zweiten Position umgeschaltet zu werden, und Steuern der zweiten elektrisch gesteuerten Luftklappe (12), um zu der vierten Position umgeschaltet zu werden, wenn bestimmt wird, dass bei der vorderen Windschutzscheibe das Risiko eines Beschlagens besteht und die aktuelle Umgebungstemperatur geringer als der erste Schwellenwert ist; das Steuern des Gebläses (3), um zu starten, das Steuern des ersten Endes des Halbleiterkühlchips (5), um zu kühlen, das Steuern der ersten elektrisch gesteuerten Luftklappe (8), um zu der ersten Position umgeschaltet zu werden, und das Steuern der zweiten elektrisch gesteuerten Luftklappe (12), um zu der dritten Position umgeschaltet zu werden, wenn bestimmt wird, dass bei der vorderen Windschutzscheibe das Risiko eines Beschlagens besteht, und die aktuelle Umgebungstemperatur größer als der zweite Schwellenwert ist, Folgendes umfassen:

Steuern der dritten elektrisch gesteuerten Luftklappe (15), um zu der fünften Position umgeschaltet zu werden, Steuern des Gebläses (3), um zu starten, Steuern des ersten Endes des Halbleiterkühlchips (5), um zu kühlen, Steuern der ersten elektrisch gesteuerten Luftklappe (8), um zu der ersten Position umgeschaltet zu werden, und Steuern der zweiten elektrisch gesteuerten Luftklappe (12), um zu der dritten Position umgeschaltet zu werden, wenn bestimmt wird, dass bei der vorderen Windschutzscheibe das Risiko eines Beschlagens besteht und die aktuelle Umgebungstemperatur größer als der zweite Schwellenwert ist; und das Steuern des Gebläses (3), um zu starten, das Steuern des ersten Endes des Halbleiterkühlchips (5), um zu erwärmen, das Steuern der ersten elektrisch gesteuerten Luftklappe (8), um zu der ersten Position umgeschaltet zu werden, und das Steuern der zweiten elektrisch gesteuerten Luftklappe (12), um zu der dritten Position umgeschaltet zu werden, wenn bestimmt wird, dass bei der vorderen Windschutzscheibe kein Risiko eines Beschlagens besteht, und die aktuelle Fahrzeuginnentemperatur größer als der dritte Schwellenwert ist, Folgendes umfassen: Steuern der dritten elektrisch gesteuerten Luftklappe (15), um zu der fünften Position umgeschaltet zu werden, Steuern des Gebläses (3), um zu starten, Steuern des ersten Endes des Halbleiterkühlchips (5), um zu erwärmen, Steuern der ersten elektrisch gesteuerten Luftklappe (8), um zu der ersten Position umgeschaltet zu werden, und Steuern der zweiten elektrisch gesteuerten Luftklappe (12), um zu der dritten Position umgeschaltet zu werden, wenn bestimmt wird, dass bei der vorderen Windschutzscheibe kein Risiko eines Beschlagens besteht und die aktuelle Fahrzeuginnentemperatur geringer als der dritte Schwellenwert ist.

9. Verfahren nach einem der Ansprüche 5 bis 8, wobei das Bestimmen, basierend auf der aktuellen Temperatur der vorderen Windschutzscheibe, der aktuellen Feuchtigkeit der vorderen Windschutzscheibe, der aktuellen Fahrzeuginnentemperatur und der aktuellen Umgebungstemperatur, ob bei einer vorderen Windschutzscheibe ein Risiko eines Beschlagens besteht, Folgendes umfasst:

Bestimmen einer aktuellen Taupunkttemperatur basierend auf der aktuellen Luftfeuchtigkeit der vorderen Windschutzscheibe und der aktuellen Fahrzeuginnentemperatur;

Berechnen einer Differenz zwischen der aktuellen Temperatur der vorderen Windschutzscheibe und der aktuellen Taupunkttemperatur; und

Bestimmen, basierend auf der Differenz, ob bei der vorderen Windschutzscheibe das Risiko eines Beschlagens besteht.

**10.** Verfahren nach Anspruch 9, wobei das Erlangen einer aktuellen Temperatur der vorderen Windschutzscheibe, einer aktuellen Feuchtigkeit der vorderen Windschutzscheibe, einer aktuellen Fahrzeuginnentemperatur und einer aktuellen Umgebungstemperatur Folgendes umfasst:

Erlangen der aktuellen Temperatur der vorderen Windschutzscheibe, der aktuellen Feuchtigkeit der vorderen Windschutzscheibe, der aktuellen Fahrzeuginnentemperatur, der aktuellen Umgebungstemperatur, einer aktuellen Anzahl von Personen im Fahrzeuginneren und einer aktuellen Niederschlagsmenge; und

das Bestimmen, basierend auf der Differenz, ob bei der vorderen Windschutzscheibe das Risiko eines Beschlagens besteht, Folgendes umfasst:

Anpassen der Differenz basierend auf der aktuellen Anzahl von Personen im Fahrzeuginneren und der aktuellen Niederschlagsmenge und Bestimmen, basierend auf der angepassten Differenz, ob bei der vorderen Windschutzscheibe das Risiko eines Beschlagens besteht.

**11.** Klimaanlagensteuerung, wobei die Klimaanlagensteuerung einen Prozessor und einen Speicher umfasst, der Speicher mindestens eine Anweisung speichert und die Anweisung durch den Prozessor geladen und ausgeführt wird, um einen Vorgang umzusetzen, der in dem Verfahren nach einem der Ansprüche 5 bis 10 durchgeführt wird.

**12.** Fahrzeugantibeschlagungssystem, wobei das Fahrzeugantibeschlagungssystem die Klimaanlagensteuerung nach Anspruch 11 und die Fahrzeugklimaanlagenbox nach einem der Ansprüche 1 bis 4 umfasst.

## Revendications

**1.** Boîtier de climatisation de véhicule, comprenant : un conduit d'air principal (1), un conduit d'air de climatisation (2), un ventilateur (3), une première structure de dissipation de chaleur (4) et une puce de réfrigération à semi-conducteur (5), dans lequel

le conduit d'air principal (1) est en communication avec le conduit d'air de climatisation (2) ;

le ventilateur (3), la première structure de dissipation de chaleur (4) et la puce de réfrigération à semi-conducteur (5) sont disposés dans le conduit d'air principal (1) ; et

une première extrémité de la puce de réfrigération à semi-conducteur (5) est en contact avec la première structure de dissipation thermique (4),

le boîtier de climatisation de véhicule comprend également une seconde structure de dissipation de chaleur (6), un composant conducteur de chaleur (7) et une première porte d'air à commande électrique (8), dans lequel une seconde extrémité de la puce de réfrigération à semi-conducteur (5) est connectée à la seconde structure de dissipation de chaleur (6) à travers le composant conducteur de chaleur (7), **caractérisé en ce que** une première ouverture de communication d'air (9) et une seconde ouverture de communication d'air (10) sont disposées entre le conduit d'air principal (1) et le conduit d'air de climatisation (2), la première ouverture de communication d'air (9) est située entre une première section de conduit d'air (101) du conduit d'air principal (1) et le conduit d'air de climatisation (2), et la seconde ouverture de communication d'air (10) est située entre une seconde section de conduit d'air (102) du conduit d'air principal (1) et le conduit d'air de climatisation (2) ;

la première porte d'air à commande électrique (8) est disposée au niveau de la première ouverture de communication d'air (9), lorsque la première porte d'air à commande électrique (8) est située dans une première position, la première porte d'air à commande électrique (8) bloque la première section de conduit d'air (101) à partir de la seconde section de conduit d'air (102), et la première section de conduit d'air (101) est en communication avec le conduit d'air de climatisation (2), et lorsque la première porte d'air à commande électrique (8) est située dans une deuxième position, la première porte d'air à commande électrique (8) bloque la première section de conduit d'air (101) à partir du conduit d'air de climatisation (2), et la première section de conduit d'air (101) est en communication avec la seconde section de conduit d'air (102) ; et

la seconde structure de dissipation de chaleur (6) est disposée dans la seconde section de conduit d'air (102).

2.  Boîtier de climatisation de véhicule selon la revendication 1, dans lequel le boîtier de climatisation de véhicule comprend également un conduit de sortie d'air à l'extérieur du véhicule (11) et une deuxième porte d'air à commande électrique (12) ;

    une extrémité du conduit de sortie d'air à l'extérieur du véhicule (11) est connectée à la seconde section de conduit d'air (102) ; et
    la deuxième porte d'air à commande électrique (12) est disposée au niveau de la seconde ouverture de communication d'air (10), lorsque la deuxième porte d'air à commande électrique (12) est située dans une troisième position, la deuxième porte d'air à commande électrique (12) bloque la seconde section de conduit d'air (102) à partir du conduit d'air de climatisation (2), et lorsque la deuxième porte d'air à commande électrique (12) est située dans une quatrième position, la deuxième porte d'air à commande électrique (12) bloque le conduit de sortie d'air à l'extérieur du véhicule (11) à partir de la seconde section de conduit d'air (102).

3.  Boîtier de climatisation de véhicule selon la revendication 2, dans lequel le boîtier de climatisation de véhicule comprend également un conduit d'entrée d'air à l'extérieur du véhicule (13), un conduit d'entrée d'air à l'intérieur du véhicule (14), et une troisième porte d'air à commande électrique (15) ;

    une extrémité du conduit d'entrée d'air extérieur du véhicule (13) est connectée au conduit d'entrée d'air à l'intérieur du véhicule (14), et est connectée à la première section de conduit d'air (101) ;
    une extrémité du conduit d'entrée d'air à l'intérieur du véhicule (14) est connectée au conduit d'entrée d'air à l'extérieur du véhicule (13), et est connectée à la première section de conduit d'air (101) ; et
    la troisième porte d'air à commande électrique (15) est disposée au niveau d'un joint entre le conduit d'entrée d'air à l'intérieur du véhicule (14) et le conduit d'entrée d'air à l'extérieur du véhicule (13), lorsque la troisième porte d'air à commande électrique (15) est située dans une cinquième position, la troisième porte d'air à commande électrique (15) bloque le conduit d'entrée d'air à l'extérieur du véhicule (13) à partir de la première section de conduit d'air (101), et bloque le conduit d'entrée d'air à l'extérieur du véhicule (13) à partir du conduit d'entrée d'air à l'intérieur du véhicule (14), et lorsque la troisième porte d'air à commande électrique (15) est située dans une sixième position, la troisième porte d'air à commande électrique (15) bloque le conduit d'entrée d'air à l'intérieur du véhicule (14) à partir de la première section de conduit d'air (101), et bloque le conduit d'entrée d'air à l'intérieur du véhicule (14) à partir du conduit d'entrée d'air à l'extérieur du véhicule (13).

4.  Boîtier de climatisation de véhicule selon l'une quelconque des revendications 1 à 3, dans lequel le composant conducteur de chaleur (7) est un tuyau en cuivre.

5.  Procédé de commande d'un boîtier de climatisation de véhicule, dans lequel le procédé est appliqué au boîtier de climatisation de véhicule selon l'une quelconque des revendications 1 à 4, et le procédé étant **caractérisé par** :

    l'obtention d'une température de pare-brise avant actuelle, d'une humidité de pare-brise avant actuelle, d'une température actuelle à l'intérieur du véhicule et d'une température ambiante actuelle ;
    le fait de déterminer, sur la base de la température de pare-brise avant actuelle, de l'humidité de pare-brise avant actuelle, de la température actuelle à l'intérieur du véhicule et de la température ambiante actuelle, si un pare-brise avant présente un risque de formation de buée ;
    la commande du démarrage du ventilateur (3), et la commande du refroidissement de la première extrémité de la puce de réfrigération à semi-conducteur (5) s'il est déterminé que le pare-brise avant présente un risque de formation de buée, et
    la commande du démarrage du ventilateur (3), et la commande du chauffage de la première extrémité de la puce de réfrigération à semi-conducteur (5) s'il est déterminé que le pare-brise avant ne présente aucun risque de formation de buée et que la température actuelle à l'intérieur du véhicule est inférieure à un troisième seuil ;
    dans lequel la commande du démarrage du ventilateur (3), et la commande du refroidissement de la première extrémité de la puce de réfrigération à semi-conducteur (5) s'il est déterminé que le pare-brise avant présente un risque de formation de buée comprennent :

    la commande du démarrage du ventilateur (3), la commande du refroidissement de la première extrémité de la puce de réfrigération à semi-conducteur (5) et la commande de la première porte d'air à commande électrique (8) pour qu'elle soit commutée vers la deuxième position s'il est déterminé que le pare-brise avant présente le risque de formation de buée, et que la température ambiante actuelle est inférieure à un premier seuil ; et

dans lequel la commande du démarrage du ventilateur (3), et la commande du chauffage de la première extrémité de la puce de réfrigération à semi-conducteur (5) s'il est déterminé que le pare-brise avant ne présente aucun risque de formation de buée et que la température actuelle à l'intérieur du véhicule est inférieure au troisième seuil comprennent :

la commande du démarrage du ventilateur (3), la commande du chauffage de la première extrémité de la puce de réfrigération à semi-conducteur (5) et la commande de la première porte d'air à commande électrique (8) pour qu'elle soit commutée vers la première position s'il est déterminé que le pare-brise avant ne présente aucun risque de formation de buée, et que la température actuelle à l'intérieur du véhicule est inférieure au troisième seuil.

6. Procédé selon la revendication 5, dans lequel le procédé comprend également :

la commande du démarrage du ventilateur (3), la commande du refroidissement de la première extrémité de la puce de réfrigération à semi-conducteur (5) et la commande de la première porte d'air à commande électrique (8) pour qu'elle soit commutée vers la première position s'il est déterminé que le pare-brise avant présente le risque de formation de buée, et que la température ambiante actuelle est supérieure à un deuxième seuil.

7. Procédé selon la revendication 6, dans lequel le procédé est appliqué au boîtier de climatisation de véhicule selon la revendication 2 ;

la commande du démarrage du ventilateur (3), la commande du refroidissement de la première extrémité de la puce de réfrigération à semi-conducteur (5) et la commande de la première porte d'air à commande électrique (8) pour qu'elle soit commutée vers la deuxième position s'il est déterminé que le pare-brise avant présente le risque de formation de buée, et que la température ambiante actuelle est inférieure au premier seuil comprennent :

la commande du démarrage du ventilateur (3), la commande du refroidissement de la première extrémité de la puce de réfrigération à semi-conducteur (5), la commande de la première porte d'air à commande électrique (8) pour qu'elle soit commutée vers la deuxième position et la commande de la deuxième porte d'air à commande électrique (12) pour qu'elle soit commutée vers la quatrième position, s'il est déterminé que le pare-brise avant présente le risque de formation de buée, et que la température ambiante actuelle est inférieure au premier seuil ;

la commande du démarrage du ventilateur (3), la commande du refroidissement de la première extrémité de la puce de réfrigération à semi-conducteur (5) et la commande de la première porte d'air à commande électrique (8) pour qu'elle soit commutée vers la première position s'il est déterminé que le pare-brise avant présente le risque de formation de buée, et que la température ambiante actuelle est supérieure au deuxième seuil comprennent :

la commande du démarrage du ventilateur (3), la commande du refroidissement de la première extrémité de la puce de réfrigération à semi-conducteur (5), la commande de la première porte d'air à commande électrique (8) pour qu'elle soit commutée vers la première position et la commande de la deuxième porte d'air à commande électrique (12) pour qu'elle soit commutée vers la troisième position, s'il est déterminé que le pare-brise avant présente le risque de formation de buée, et que la température ambiante actuelle est supérieure au deuxième seuil ; et

la commande du démarrage du ventilateur (3), la commande du chauffage de la première extrémité de la puce de réfrigération à semi-conducteur (5) et la commande de la première porte d'air à commande électrique (8) pour qu'elle soit commutée vers la première position s'il est déterminé que le pare-brise avant ne présente aucun risque de formation de buée, et que la température actuelle à l'intérieur du véhicule est inférieure au troisième seuil comprennent :

la commande du démarrage du ventilateur (3), la commande du chauffage de la première extrémité de la puce de réfrigération à semi-conducteur (5), la commande de la première porte d'air à commande électrique (8) pour qu'elle soit commutée vers la première position et la commande de la deuxième porte d'air à commande électrique (12) pour qu'elle soit commutée vers la troisième position, s'il est déterminé que le pare-brise avant ne présente aucun risque de formation de buée, et que la température actuelle à l'intérieur du véhicule est inférieure au troisième seuil.

8. Procédé selon la revendication 7, dans lequel le procédé est appliqué au boîtier de climatisation de véhicule selon la revendication 3 ;

la commande du démarrage du ventilateur (3), la commande du refroidissement de la première extrémité de la puce de réfrigération à semi-conducteur (5), la commande de la première porte d'air à commande électrique (8) pour qu'elle soit commutée vers la deuxième position et la commande de la deuxième porte d'air à commande électrique (12) pour qu'elle soit commutée vers la quatrième position, s'il est déterminé que le pare-brise avant présente le risque de formation de buée, et que la température ambiante actuelle est inférieure au premier seuil comprennent :

la commande de la troisième porte d'air à commande électrique (15) pour qu'elle soit commutée vers la sixième position, la commande du démarrage du ventilateur (3), la commande du refroidissement de la première extrémité de la puce de réfrigération à semi-conducteur (5), la commande de la première porte d'air à commande électrique (8) pour qu'elle soit commutée vers la deuxième position et la commande de la deuxième porte d'air à commande électrique (12) pour qu'elle soit commutée vers la quatrième position, s'il est déterminé que le pare-brise avant présente le risque de formation de buée, et que la température ambiante actuelle est inférieure au premier seuil ;

la commande du démarrage du ventilateur (3), la commande du refroidissement de la première extrémité de la puce de réfrigération à semi-conducteur (5), la commande de la première porte d'air à commande électrique (8) pour qu'elle soit commutée vers la première position et la commande de la deuxième porte d'air à commande électrique (12) pour qu'elle soit commutée vers la troisième position, s'il est déterminé que le pare-brise avant présente le risque de formation de buée, et que la température ambiante actuelle est supérieure au deuxième seuil comprennent :

la commande de la troisième porte d'air à commande électrique (15) pour qu'elle soit commutée vers la cinquième position, la commande du démarrage du ventilateur (3), la commande du refroidissement de la première extrémité de la puce de réfrigération à semi-conducteur (5), la commande de la première porte d'air à commande électrique (8) pour qu'elle soit commutée vers la première position et la commande de la deuxième porte d'air à commande électrique (12) pour qu'elle soit commutée vers la troisième position, s'il est déterminé que le pare-brise avant présente le risque de formation de buée, et que la température ambiante actuelle est supérieure au deuxième seuil ; et

la commande du démarrage du ventilateur (3), la commande du chauffage de la première extrémité de la puce de réfrigération à semi-conducteur (5), la commande de la première porte d'air à commande électrique (8) pour qu'elle soit commutée vers la première position et la commande de la deuxième porte d'air à commande électrique (12) pour qu'elle soit commutée vers la troisième position, s'il est déterminé que le pare-brise avant ne présente aucun risque de formation de buée, et que la température actuelle à l'intérieur du véhicule est inférieure au troisième seuil comprennent :

la commande de la troisième porte d'air à commande électrique (15) pour qu'elle soit commutée vers la cinquième position, la commande du démarrage du ventilateur (3), la commande du chauffage de la première extrémité de la puce de réfrigération à semi-conducteur (5), la commande de la première porte d'air à commande électrique (8) pour qu'elle soit commutée vers la première position et la commande de la deuxième porte d'air à commande électrique (12) pour qu'elle soit commutée vers la troisième position, s'il est déterminé que le pare-brise avant ne présente aucun risque de formation de buée, et que la température actuelle à l'intérieur du véhicule est inférieure au troisième seuil.

9. Procédé selon l'une quelconque des revendications 5 à 8, dans lequel le fait de déterminer, sur la base de la température de pare-brise avant actuelle, de l'humidité de pare-brise avant actuelle, de la température actuelle à l'intérieur du véhicule et de la température ambiante actuelle, si un pare-brise avant présente un risque de formation de buée comprend ;

la détermination d'une température de point de rosée actuelle sur la base de l'humidité de pare-brise avant actuelle et de la température actuelle à l'intérieur du véhicule ;
le calcul d'une différence entre la température de pare-brise avant actuelle et la température de point de rosée actuelle ; et
le fait de déterminer, sur la base de la différence, si le pare-brise avant présente le risque de formation de buée.

10. Procédé selon la revendication 9, dans lequel l'obtention d'une température de pare-brise avant actuelle, d'une humidité de pare-brise avant actuelle, d'une température actuelle à l'intérieur du véhicule et d'une température ambiante actuelle comprend :

l'obtention de la température de pare-brise avant actuelle, de l'humidité de pare-brise avant actuelle, de la température actuelle à l'intérieur du véhicule, de la température ambiante actuelle, d'une quantité actuelle de personnes à l'intérieur du véhicule et d'une quantité de pluie actuelle ; et
le fait de déterminer, sur la base de la différence, si le pare-brise avant présente le risque de formation de buée comprend :
le réglage de la différence sur la base de la quantité actuelle de personnes à l'intérieur du véhicule et de la quantité de pluie actuelle, et le fait de déterminer, sur la base d'une différence réglée, si le pare-brise avant présente le risque de formation de buée.

11. Contrôleur de climatiseur, dans lequel le contrôleur de climatiseur comprend un processeur et une mémoire, la mémoire stocke au moins une instruction, et l'instruction est chargée et exécutée par le processeur pour mettre en oeuvre une opération effectuée dans le procédé selon l'une quelconque des revendications 5 à 10.

12. Système de désembuage de véhicule, dans lequel le système de désembuage de véhicule comprend le contrôleur de climatiseur selon la revendication 11 et le boîtier de climatisation de véhicule selon l'une quelconque des revendications 1 à 4.

FIG. 1

First end

Second end

FIG. 2

FIG. 3

FIG. 4

FIG. 5

Obtain a current front windshield temperature, current front windshield humidity, a current inside-vehicle temperature, and a current ambient temperature — 101

Determine, based on the current front windshield temperature, the current front windshield humidity, the current inside-vehicle temperature, and the current ambient temperature, whether a front windshield has a fogging risk — 102

Yes

No

Control a blower (3) to start, and control a first end of a semiconductor refrigeration chip (5) to cool if it is determined that the front windshield has the fogging risk — 103

Control the blower (3) to start, and control the first end of the semiconductor refrigeration chip (5) to heat if it is determined that the front windshield has no fogging risk, and the current inside-vehicle temperature is less than a third threshold — 104

FIG. 6

```
┌─────────────────────────────────────────────┐
│ Obtain a current front windshield temperature,│── 201
│ current front windshield humidity, a current  │
│ inside-vehicle temperature, and a current      │
│ ambient temperature                            │
└─────────────────────────────────────────────┘
                      │
                      ▼
        ╱────────────────────────────────╲
       ╱ Determine, based on the current   ╲── 202
      ╱  front windshield temperature, the   ╲
      ╲  current front windshield humidity,   ╱
       ╲ the current inside-vehicle          ╱
        ╲ temperature, and the current      ╱
         ╲ ambient temperature, whether a  ╱
          ╲ front windshield has a         ╱
           ╲ fogging risk                 ╱
            ╲────────────────────────────╱
```

Yes    203        Yes    204         No    205

| Control a blower (3) to start, control a first end of a semiconductor refrigeration chip (5) to cool, and control a first air door (8) to be switched to a second position if it is determined that the front windshield has the fogging risk, and the current ambient temperature is less than a first threshold | Control the blower (3) to start, control the first end of the semiconductor refrigeration chip (5) to cool, and control the first air door (8) to be switched to a first position if it is determined that the front windshield has the fogging risk, and the current ambient temperature is greater than a second threshold | Control the blower (3) to start, control the first end of the semiconductor refrigeration chip (5) to heat, and control the first air door (8) to be switched to the first position if it is determined that the front windshield has no fogging risk, and the current inside-vehicle temperature is less than a third threshold |

FIG. 7

```
┌─────────────────────────────────────────────┐
│ Obtain a current front windshield            │        301
│ temperature, current front windshield        │
│ humidity, a current inside-vehicle           │
│ temperature, and a current ambient           │
│ temperature                                  │
└─────────────────────────────────────────────┘
                      │
                      ▼
          ╱─────────────────────────╲
         ╱  Determine, based on the   ╲              302
        ╱   current front windshield   ╲
       ╱  temperature, the current front ╲
       ╲ windshield humidity, the current╱
        ╲ inside-vehicle temperature, and╱
         ╲ the current ambient temperature,╱
          ╲ whether a front windshield has ╱
           ╲      a fogging risk          ╱
            ╲─────────────────────────╱
```

Yes — 303        Yes — 304        No — 305

| 303 | 304 | 305 |
|---|---|---|
| Control a blower (3) to start, control a first end of a semiconductor refrigeration chip (5) to cool, control a first air door (8) to be switched to a second position, and control a second air door (12) to be switched to a fourth position, if it is determined that the front windshield has the fogging risk, and the current ambient temperature is less than a first threshold | Control the blower (3) to start, control the first end of the semiconductor refrigeration chip (5) to cool, control the first air door (8) to be switched to a first position, and control the second air door (12) to be switched to a third position, if it is determined that the front windshield has the fogging risk, and the current ambient temperature is greater than a second threshold | Control the blower (3) to start, control the first end of the semiconductor refrigeration chip (5) to heat, control the first air door (8) to be switched to the first position, and control the second air door (12) to be switched to the third position, if it is determined that the front windshield has no fogging risk, and the inside-vehicle temperature is less than a third threshold |

FIG. 8

Obtain a current front windshield temperature, current front windshield humidity, a current inside-vehicle temperature, and a current ambient temperature — 401

Determine, based on the current front windshield temperature, the current front windshield humidity, the current inside-vehicle temperature, and the current ambient temperature, whether a front windshield has a fogging risk — 402

Yes — 403

Control a third electric control air door (15) to be switched to a sixth position, control a blower (3) to start, control a first end of a semiconductor refrigeration chip (5) to cool, control a first air door (8) to be switched to a second position, and control a second air door (12) to be switched to a fourth position, if it is determined that the front windshield has the fogging risk, and the current ambient temperature is less than a first threshold

Yes — 404

Control the third electric control air door (15) to be switched to a fifth position, control the blower (3) to start, control the first end of the semiconductor refrigeration chip (5) to cool, control the first air door (8) to be switched to a first position, and control the second air door (12) to be switched to a third position, if it is determined that the front windshield has the fogging risk, and the current ambient temperature is greater than a second threshold

No — 405

Control the third electric control air door (15) to be switched to the fifth position, control the blower (3) to start, control the first end of the semiconductor refrigeration chip (5) to heat, control the first air door (8) to be switched to the first position, and control the second air door (12) to be switched to the third position, if it is determined that the front windshield has no fogging risk, and the current inside-vehicle temperature is less than a third threshold

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015101293 A
- JP 2015093515 A
- EP 2202107 A1